(19)

**Europäisches Patentamt**
**European Patent Office**
**Office européen des brevets**

(11) **EP 2 237 214 A1**

(12) **EUROPEAN PATENT APPLICATION**

(43) Date of publication:
06.10.2010 Bulletin 2010/40

(51) Int Cl.:
*G06Q 40/00* (2006.01)

(21) Application number: 10158638.6

(22) Date of filing: 31.03.2010

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: 03.04.2009 PCT/JP2009/001567

(71) Applicant: **Win-Invest Japan Inc.**
**Chuo-ku, Tokyo 103-0026 (JP)**

(72) Inventors:
• **Sugita, Masaru**
  **Tokyo 1030026 (JP)**
• **Saito, Tomoko**
  **Tokyo 1030026 (JP)**
• **Suzuki, Hideaki**
  **Tokyo 1030026 (JP)**

(74) Representative: **Sandstedt, Jonas Sven James**
**Albihns.Zacco**
**Torggatan 8**
**Box 142**
**401 22 Göteborg (SE)**

(54) **Currency pair trading support apparatus, method and program of the same**

(57) The FX index calculation server calculates the index data ISIndex(Cn)(tc) indicating its strength about each currencies, based on the rate data RD(Cn/Cm) of 28 currency pairs inputted from the RD generation server. FX automatic trading server specifies the currency pair satisfying the condition that index data ISIndex(Cn) of both of selling currency and buying currency indicates near zero (near zero), the index data ISIndex(Cn) of the buying currency is up-trend, and the selling currency is down-trend.

F I G . 1

16 **FX INDEX CALCULATION SERVER**
12 **FX DEALER SERVER**
10 **RD GENERATION SERVER**
9
18 **FX AUTOMATIC TRADING SERVER**
14 **PRIVATE INVESTOR TERMINAL**

EP 2 237 214 A1

**Description**

**FIELD OF INVENTION**

The present invention relates to a currency pair trading support apparatus, method and program of the same.

**BACKGROUND**

Financial trading, such as exchange trading (FX), is performed via networks, such as the Internet, by development of a computer communication technology in recent years. In such a financial trading, the trading is performed by communicating between two or more broker servers and order terminals.
The trading is performed using a currency pair which is combination of different currencies in case of exchange trading. Therefore it is difficult to judge the strong currency and weak currency in unit of a currency.

**SUMMARY OF THE INVENTION**

The purpose of the present invention is to provide a currency pair trading support apparatus, method and program of the same capable of performing suitable automatic trading based on an index data indicating currency strength which is elements of the currency pair when trading a plurality of currency pairs.
A first invention is currency pair trading support apparatus, comprising: a memory storing an index data calculated for each time of a predetermined time interval by calculating a change data indicating change within the predetermined time interval of a rate data about a plurality of currency pairs respectively on the basis of the rate data indicating a trading rate of the currency pair in time sequence and accumulating the change data of the currency pairs which target currency is a buying currency or a selling currency in the currency pairs about each currency which is element of the currency pairs; a reader reading the index data from the memory on the basis of the time data; a trend judger judging whether each currency in each time is up-trend or down-trend based on the index data; a near zero judger judging whether the index data has value of a predetermined range near zero; a condition judger judging whether a condition that the index data of both of the sell currency and the buy currency indicate value of a predetermined range near zero, the sell currency is down-trend and the buy currency is up-trend is satisfied or not, and writing an information indicating the currency pair to the memory when the condition is satisfied; and an output interface outputting an information indicating the currency pair written to the memory as a trading candidate.
A second invention is a currency pair trading support apparatus, comprising: a memory storing an index data calculated for each time of a predetermined time interval by calculating a change data indicating change within the predetermined time interval of a rate data about a plurality of currency pairs respectively on the basis of the rate data indicating a trading rate of the currency pair in time sequence and accumulating the change data of the currency pairs which target currency is a buying currency or a selling currency in the currency pairs about each currency which is element of the currency pairs; a reader reading the index data from the memory on the basis of the time data; a trend judger judging whether each currency in each time is up-trend or down-trend based on the index data; a near zero judger judging whether the index data has value of a predetermined range near zero; a condition judger judging whether a condition that the index data of both of the sell currency and the buy currency indicate value of a predetermined range near zero, the sell currency is up-rend and the buy currency is down-trend is satisfied or not, and writing an information indicating the currency pair to the memory when the condition is satisfied; and an output interface outputting an information indicating the currency pair written to the memory as a trading candidate.
A third invention is a currency pair trading support method, comprising: reading an index data calculated for each time of a predetermined time interval by calculating a change data indicating change within the predetermined time interval of a rate data about a plurality of currency pairs respectively on the basis of the rate data indicating a trading rate of the currency pair in time sequence and accumulating the change data of the currency pairs which target currency is a buying currency or a selling currency in the currency pairs about each currency which is element of the currency pairs, from a memory based on time data; judging whether each currency in each time is up-trend or down-trend based on the index data; judging whether the index data has value of a predetermined range near zero; judging whether a condition that the index data of both of the sell currency and the buy currency indicate value of a predetermined range near zero, the sell currency is down-trend and the buy currency is up-trend is satisfied or not, and writing an information indicating the currency pair to the memory when the condition is satisfied; and outputting an information indicating the currency pair written to the memory as a trading candidate.
A fourth invention is a computer program having computer instructions on a computer readable medium, the instructions being adapted to enable a computer system to perform operation, comprising: reading an index data calculated for each time of a predetermined time interval by calculating a change data indicating change within the predetermined time interval of a rate data about a plurality of currency pairs respectively on the basis of the rate data indicating a trading rate of the currency pair in time sequence and accumulating the change data of the currency pairs which target currency is a buying currency or a selling currency in the currency pairs about each currency which is element of the currency pairs, from a memory based on time data; judging whether each currency in each time is up-trend or down-trend based on the index data; judging whether the index data has value of a predetermined range near zero; judging whether a condition that the index data of both of the sell currency and the buy currency indicate value of a predetermined range near zero, the sell currency is down-trend and the buy currency is up-trend is satisfied or not, and writing an information indicating the currency pair to the memory when the condition is satisfied; and outputting an information indicating the currency pair written to the memory as a trading candidate.

## BRIEF DESCRIPTION OF THE DRAWINGS

Fig.1 is a general view of the FX processing system 1 relating to the embodiment of the present invention.
Fig.2 is a view for explaining change of time sequence of rate data.
Fig.3 is a view for explaining types of currency pair for currency exchange.
Fig.4 is block diagram of the private investor terminal 14 shown in Fig.1.
Fig.5 is block diagram of the FX index calculation server 16 shown in Fig.1.
Fig.6 is a view for explaining method of generating index data ISIndex in the FX index calculation server shown in Fig.5.

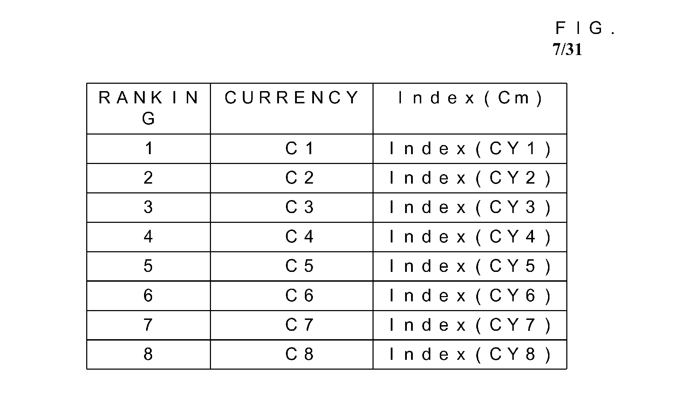

Fig.7 is a view for explaining an example of method of displaying index data in the FX index calculation server shown in Fig.5.
Fig.8 is a view for explaining method of generating index data ISIndex in the FX index calculation server shown in Fig.5.
Fig.9 is functional block diagram of FX index calculation server shown in Fig.5.
Fig. 10 is a figure for explaining data writing and reading with respect to the memory 37 by the processing circuit 41 in the embodiment of the present invention.
Fig. 11 is a figure for explaining the writing and reading operation of the rate data RD(Cn/Cm).
Fig. 12 is a figure for explaining the writing and reading operation of the change value delta R(Cn/Cm)(tc).
Fig. 13 is a figure for explaining the reading and writing of the index data Index(Cn)(tc) to the memory 37.
Fig. 14 is a figure for explaining the reading and writing of the Roc data to the memory 37.
Fig.15 is a flowchart for explaining the process of Step ST1 to ST4 shown in Fig.16.
Fig.16 is a functional block diagram of the FX automatic trading server shown in Fig.1.
Fig.17 is a flowchart for explaining the FX automatic trading server shown in Fig.16.
Fig.18 is a figure for explaining the reading and writing of the index data ISIndex to the memory 37.
Fig.19 is a view for explaining an example of method of displaying index data in the FX automatic trading server shown in Fig.16.
Fig.20 is a view for explaining an example of display based on index data Index(Cm) in the FX automatic trading server shown in Fig.16.
Fig.21 is a view for explaining an example of display based on index data Index(Cm) in the FX automatic trading server shown in Fig.16.
Fig22A is a view showing rate of currency pair for explaining the processing of the FX automatic trading server shown in Fig.16.
Fig22B is a view showing index data of currency which is element of currency pair for explaining the processing of the FX automatic trading server shown in Fig.16.
Fig22C is a view showing RSI value of index data which is element of currency pair for explaining the processing of the FX automatic trading server shown in Fig.16.
Fig.23 is a functional block diagram of the FX automatic trading server shown in Fig.16.
Fig.24 is a flowchart for explaining the FX automatic trading server of the second embodiment of the present invention.
Fig.25 is a view of index data for explaining the processing of the FX automatic trading server of second embodiment of the present invention.
Fig.26 is a view of index data for explaining the processing of the FX automatic trading server of third embodiment of the present invention.
Fig.27 is a view of index data for explaining the processing of the FX automatic trading server of fourth embodiment of the present invention.
Fig. 28 is a figure for explaining the reading and writing of RSI value to memory by processing circuit shown in Fig.16.
Fig29A is a view showing rate of currency pair for explaining the processing of the FX automatic trading server shown in Fig.16.
Fig29B is a view showing index data of currency which is element of currency pair for explaining the processing of the FX automatic trading server shown in Fig.16.

Fig29C is a view showing RSI value of index data which is element of currency pair for explaining the processing of the FX automatic trading server shown in Fig.16.

Fig.30 is a view of index data for explaining the processing of the FX automatic trading server of fifth embodiment of the present invention.

Fig.31 is a view of index data for explaining the processing of the FX automatic trading server of sixth embodiment of the present invention.

## DETAILED DESCRIPTION OF THE INVENTION

### [The preferred embodiment of this invention]

<First Embodiment>

Below a FX processing system relating to the embodiment of the present invention will be explained.

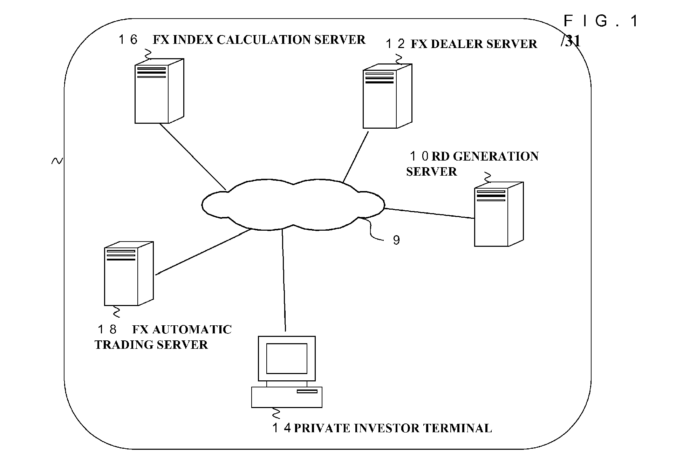

Fig.1 is a general view of the FX processing system 1 relating to the embodiment of the present invention.

As shown in Fig.1, the FX processing system 1 comprises a RD generation server 10, a FX dealer server 12, a private investor terminal 14, a FX index calculation server 16, and a FX automatic trading server 18.

Below a relationship between components of the present invention and components of the present embodiment will be explained.

A rate data RD(Cn/Cm) is an example of the rate data of the present invention. an index data ISIndex(Cn) of the present embodiment is an example of the index data of the present invention.

Currency Cn of a currency pair Cn/Cm is an example of a buying currency, currency Cm is a example of the selling currency.

[RD generation server 10]

The RD generation server 10 is constituted by a plurality of FX trading server which manages trading of currency pair. Each FX trading server manages the trading of currency pairs which are under jurisdiction of itself.

Each FX trading server generates rate data indicating the rate of the currency pair which is under jurisdiction of itself in time sequence.

The rate data generated by each FX trading server is opened to the public.

In the present embodiment, 28 FX trading server which generates rate data RD(Cn/Cm) respectively are used.

Each FX trading server determines a rate data of currency pair based on selling and buying information (which is provided by the FX dealer server 12) from investors about currency pair which is under jurisdiction of itself.

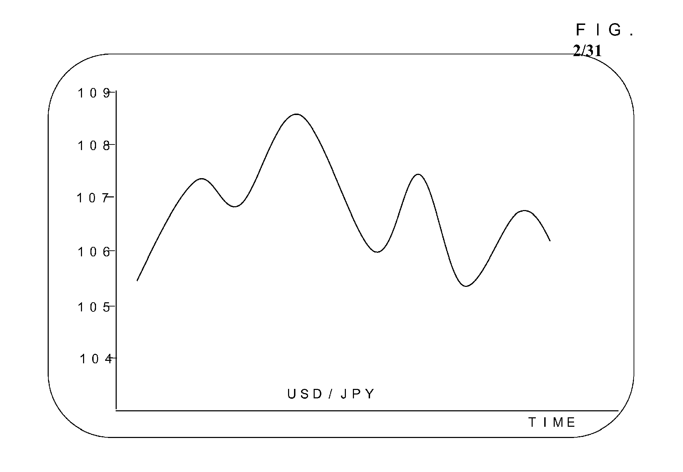

For example, the FX trading server of the currency pair "USD/JPY" generates the rate data RD(USD/JPY) shown in Fig. 2.

The rate data RD(Cn/Cm) indicates the rate of a predetermined time interval. The rate data RD(Cn/Cm) is defined for each of a plurality of charts, for example monthly chart, weekly chart, daily chart and minute chart.

In the present embodiment, the rate data RD(Cn/Cm) of the currency pair Cn/Cm at the time tc is shown as "RD (Cn/Cm)(tc)".

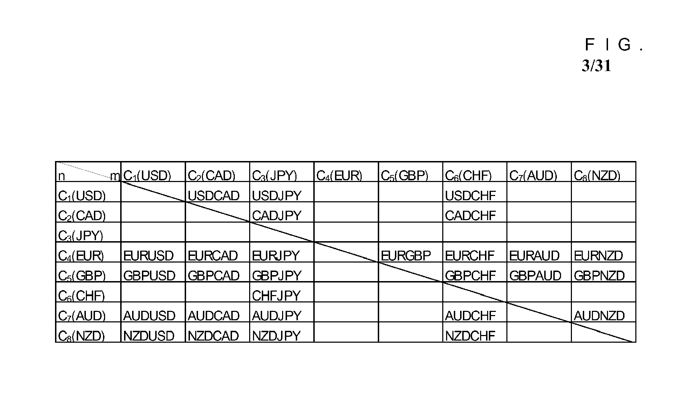

Here "n" and "m" is defined as shown in Fig.3.

In this case, the 28 FX trading servers which constitutes the RD generation server 10 generate rate data RD (Cn/Cm) shown in Fig.3.

[FX dealer server 12]

The FX dealer server 12 transmits an order based on the order of selling or buying which specifies the currency pair from the private investor terminal 14 and the FX automatic trading server 18.

The order indicates prices (bit/offer) of the trading.

[private investor terminal 14]

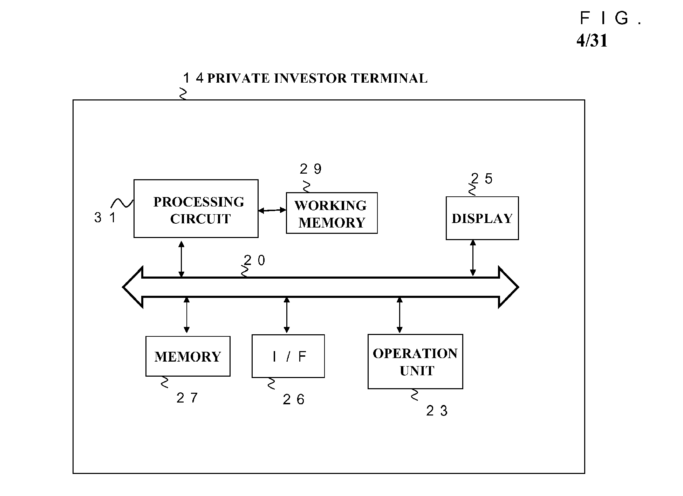

Fig.4 is block diagram of the private investor terminal 14 shown in Fig.1.

As shown in Fig.4, the private investor terminal 14 has an interface 26, an operating portion 23, a display 25, a memory 27, a working memory 29 and a processing circuit 31, for example.

Here, the [21], the operating portion 23, the display 25, the memory 27 and the processing circuit 31 are connected via an internal bus 20.

The interface 26 performs transmission and reception of data and request with the FX dealer server 12 and the FX index calculation server 16 via network 9.

The operating portion 23 is a keyboard, a mouse, etc. for an individual investor to operate it.

The display 25 displays the screen according to the display signal from the processing circuit 31.

The memory 27 memorizes the program and data which are used for processing of the processing circuit 31.

The working memory 29 memorizes a middle data in the middle of the processing in the processing circuit 31 etc.

The processing circuit 31 executes the program read from the memory 27.

The processing circuit 31 generalizes and controls processing of the private investor terminal 14. Moreover, the processing circuit 31 memorizes suitably the data in the middle of the processing to the memory 27.

In the present embodiment, the private investor terminal 14 transmits an automatic trading request to the FX automatic trading server 18, and the FX automatic trading server 18 performs automatic trading mentions later based on the request. Moreover, the private investor terminal 14 may perform trading of the currency pair.

[FX index calculation server 16]

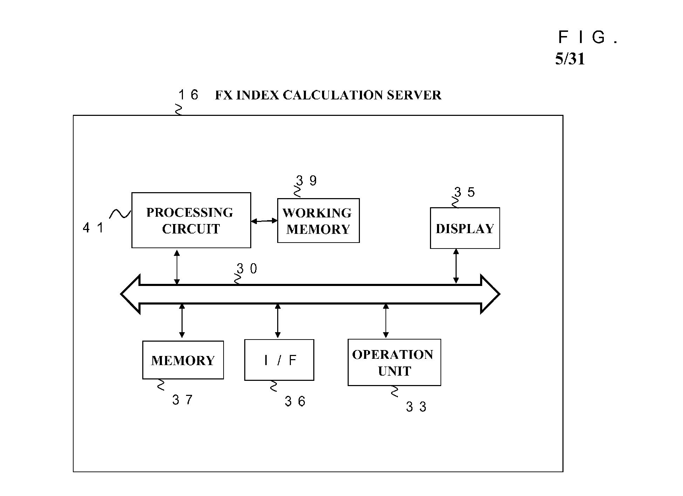

Fig.5 is block diagram of the FX index calculation server 16 shown in Fig.1.

As shown in Fig.5, the FX index calculation server 16 has an interface 36, an operating portion 33, a display 35, a memory 37, a working memory 39 and a processing circuit 41, for example.

Here, the processing circuit 31, the operating portion 33, the display 35, the memory 37 and the processing circuit 41 are connected via an internal bus 30.

The interface 36 performs transmission and reception of data and request with the RD generation server 10 and the private investor terminal 14 via network 9.

The operating portion 33 is a keyboard, a mouse, etc. for a manager of the FX index calculation server 16 to operate it.

The display 35 displays the screen according to the display signal from the processing circuit 41.

The memory 37 memorizes the program and data which are used for processing of the processing circuit 41.

The processing circuit 41 generalizes and controls processing of the FX index calculation server 16.

The data used in the processing circuit 41 and the computed data are temporarily memorized by the memory means of the working memory 39 or the memory 37. Although operation of reading and writing among the processing circuit 41, working memory 39 and memory 37 is not specified in the present embodiment, it is carried out for every processing of the processing circuit 41.

The FX index calculation server 16 calculates the index data ISIndex(Cn)(tc) indicating its strength about each of USD, JPY, GBP, EUR, CHF, AUD, NZD, CAD, based on the rate data RD(Cn/Cm) of 28 currency pair inputted from the RD generation server 10.

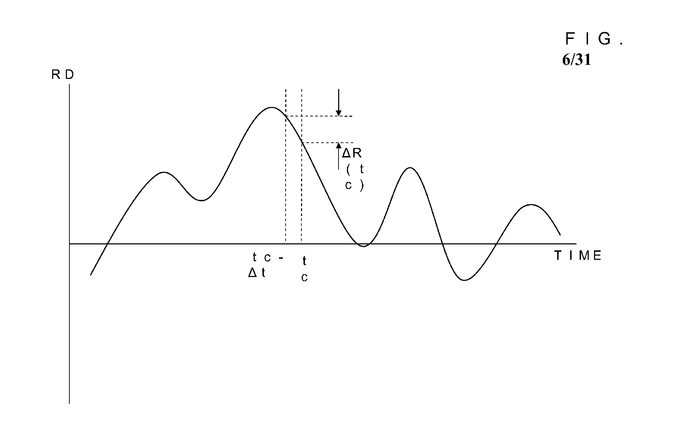

Below, the operation of the FX index calculation server 16 will be explained. The processing circuit 41 inputs the rate data RD(Cn/Cm) shown in Fig.6.

The processing circuit 41 specifies a change value delta R(Cn/Cm)(tc) of the rate data RD(Cn/Cm) at intervals of predetermined time delta t (for example 1 minute interval). Here the change value delta R(Cn/Cm)(tc) of the time tc is shown as the following equation (1)

[Equation 1]

$$
\text{delta } R(Cn/Cm)(tc) \\
= RD(Cn/Cm)(tc) - RD(Cn/Cm)(tc - \text{delta } t) \\
\quad ...(1)
$$

That is, the processing circuit 41 computes change value delta R(Cn/Cm)(tc) obtained by subtracting the rate data RD(Cn/Cm) of the time tc read from the memory 37 from the rate data RD(Cn/Cm) of the time "tc-delta t" read from the memory 37, and writes it in the working memory 39. The processing circuit 41 performs the processing for each currency Cn with all other currency Cm.

And the processing circuit 41 reads the change value delta R(Cn/Cm)(tc) computed by the formula (1) from the working memory 39. As shown in the following equation (2), the processing circuit 41 multiplies the change value delta R(Cn/Cm)(tc) with an adjustment coefficient Z(Cn/Cm) of the currency pair Cn/Cm to obtain corrected change value delta CR(Cn/Cm)(tc) and memorize it to the memory 37 or the working memory 39.

The adjustment coefficient Z(Cn/Cm) indicates a coefficient for exchanging into a predetermined currency. In the present embodiment, for example, an adjustment coefficient for exchanging all of the change value into yen (JPY).

[Equation 2]

$$\text{delta } CR(Cn/Cm)(tc) = \text{delta } R(Cn/Cm)(tc) * Z(Cn/Cm) \quad \dots(2)$$

And the processing circuit 41 computes the index data Index(Cn)(tc) by accumulating the corrected change value delta CR(Cn/Cm)(tc) of m=1 to 8, while fixing the value of "n" corresponding to the currency, about each of the 8 currencies Cn, as shown in the following equation (3).

In the equation (3), the delta CR (Cn/Cm:Cn/Cm)(tc) indicates the corrected change value delta CR of currency pair in which the currency Cn is a selling currency or a buying currency. In this case, when the currency Cn is a selling currency, it is added with the delta CR, and when the currency Cn is a buying currency, it is subtracted by the delta CR.

[Equation 3]

$$\text{Index}(Cn)(tc) = \sum_{m=1\sim8,\; n\neq m} \text{delta } CR(Cn/Cm:Cm/Cn)(tc) \quad \dots(3)$$

And, about each of the eight currencies Cn, as shown in the following equation (4), the processing circuit 41 computes the average of the index data Index(Cn)(tc) of time t=tc, tc-1, ..., tc-x, and writes it to the memory 37 as the index data ISIndex(Cn)(tc).

[Equation 4]

$$\text{ISIndex}(Cn)(tc) = \sum_{t=tc,\;\dots\;tc-x} \text{Index}(Cn)(t)/(x+1) \quad \dots(4)$$

In addition, the processing circuit 41 may correct the index data ISIndex(Cn)(tc) of each currency generated by the equation (3) by using a predetermined corrected value delta CIndex(Cn) about each currency.

For example, the processing circuit 41 performs addition or multiplication of the corrected value delta CIndex(Cn) with respect to the index data ISIndex(Cn)(tc) of each currency. And sorting processing later mentioned is performed by using the index data ISIndex(Cn)(tc) after addition (multiplication).

The corrected value delta CIndex(Cn) is determined artificially or automatically based on information for example, other than the rate data RD(Cn/Cm), such as market expectation of each country, a political trend, and an economic trend.

The corrected value delta CIndex(Cn) is memorized by the memory 37 of the FX index calculation server 16.

When a decrease possibility factor is in the currency, the value is small, and when there is an increase possibility factor, the value is large. Moreover, the value of positive/negative is used.

Important information (for example, market expectation of each country, a political trend, an economic trend, etc.) which can not be read from the rate data RD(Cn/Cm) can be made to reflect in the index data ISIndex(Cn)(tc) by using the corrected value delta CIndex(Cn).

The processing circuit 41 may decide ranking by comparing the currency and the other currency, and calculating the moved percentage about all of the currency pairs of targets.

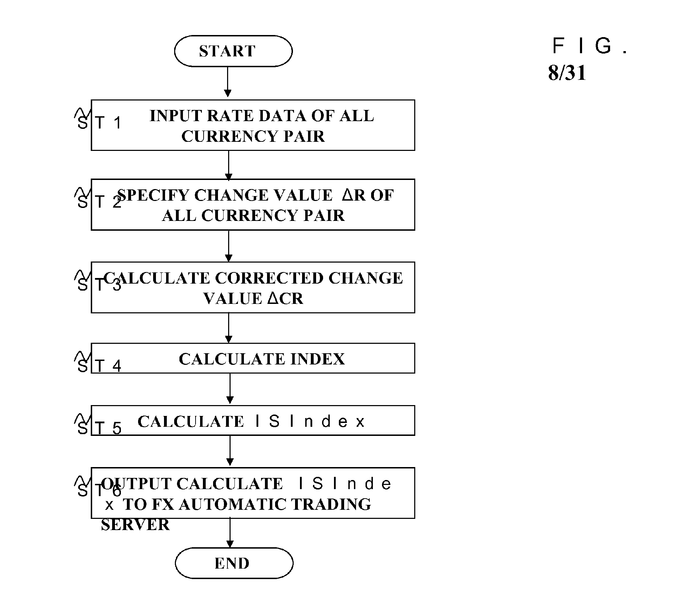

Hereafter, the example of the operation of the FX index calculation server 16 shown in Fig. 1 will be explained. Fig. 8 is a flow chart for explaining the example of the operation of the FX index calculation server 16 shown in Fig. 1.
Step ST1:

The 28 servers which constitute the RD generation server 10 shown in Fig.1 generate the rate data RD(Cn/Cm) of 28 currency pairs shown in Fig. 3.

The processing circuit 41 of the FX index calculation server 16 shown in Fig. 5 transmits a request to the FX index calculation server 16 via the interface 36, and inputs the rate data RD(Cn/Cm) of 28 currency pairs.

The processing circuit 41 writes the rate data RD(Cn/Cm) of 28 currency pairs to the memory 37 shown in Fig. 5. At this time, the processing circuit 41 write the rate value of each time of predetermined time interval which constitutes the rate data RD(Cn/Cm) to the memory 37 in association with the time data in the format enabling to read the rate value by using the time data as key. The data write processing to the memory 37 by the processing circuit 41 is explained in detail later.

Step ST2:

The processing circuit 41 of the FX index calculation server 16 reads 28 rate data RD(Cn/Cm) written in the memory 37 at Step ST1, and generates the change value delta R(Cn/Cm)(tc) based on the equation (1), for each time tc.
At this time, the processing circuit 41 reads the rate value RD (Cn/Cm) of the rate data RD(Cn/Cm) corresponding to each time tc from the memory 37 by using the time data indicating each of time tc of the equation (1) as a key. Next, the processing circuit 41 calculates the difference of the rate value RD (Cn/Cm) (tc) of the time (tc), and the rate value RD (Cn/Cm) (tc-delta t) of the adjoining time (tc-delta t), and writes the result of the calculation as change value delta R(Cn/Cm)(tc) of a predetermined time width to the memory 37.

The processing circuit 41 writes the generated 28 change value delta R(Cn/Cm)(tc) to the memory 37.

Step ST3:

As shown in the equation (2), the processing circuit 41 multiples the change value delta R(Cn/Cm)(tc) calculated at Step 2 with the adjustment coefficient Z(Cn/Cm) as shown in Fig.2 to generate the corrected change value delta CR(Cn/Cm)(tc), and writes the corrected change value delta CR(Cn/Cm)(tc) in the memory 37.

Step ST4:

The processing circuit 41 computes the index data Index(Cn)(tc) by accumulating the corrected change value delta CR(Cn/Cm)(tc) of m=1 to 8,while fixing the value of "n" corresponding to the currency, about each of the 8 currencies Cn, as shown in the equation (3).

The processing circuit 41 writes the generated index data Index(Cn)(tc) of the 8 currencies to the memory 37.

Step ST5:

About each of the eight currencies Cn, as shown in the equation (4), the processing circuit 41 computes the average of the index data Index(Cn)(tc) of time t=tc, tc-1, ..., tc-x, and writes it to the memory 37 as the index data ISIndex (Cn)(tc).

Step ST6:

The processing circuit 41 reads the index data ISIndex(Cn)(tc) from the memory 37 according to the request from the FX automatic trading server 18 and transmits it to the FX automatic trading server 18 via the interface 36.

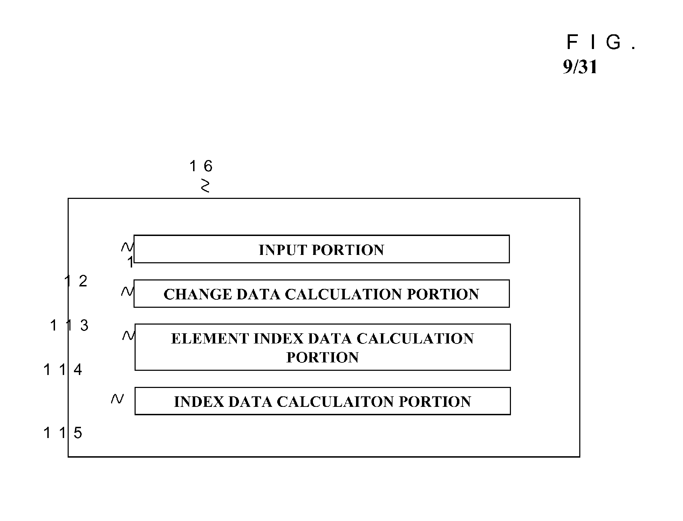

As shown in Fig.9, the processing shown in Fig.8 is realized by function modules of an input portion 112, a change data calculation portion 113, an element index data calculation portion 114 and an index data calculation portion 115. These function module may be realized by program processing of the processing circuit 41 or electric circuit. The input portion 112 performs the processing of Step ST1. The change data calculation portion 113 performs the processing of Steps ST2 and ST3. The element index data calculation portion 114 performs the processing of Step ST 4. The index data calculation portion 115 performs the processing of Step ST5.

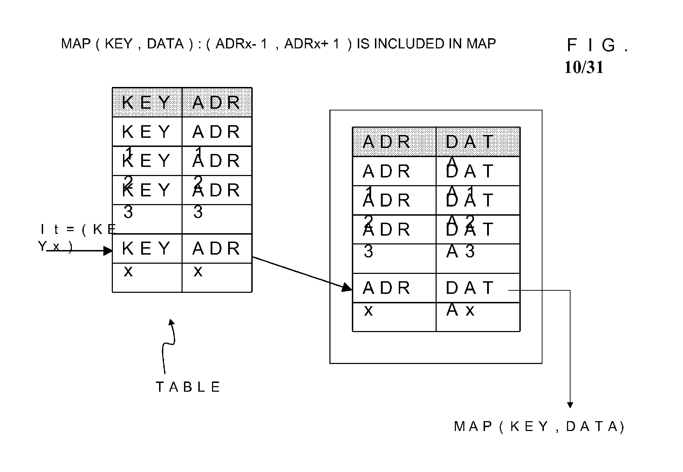

Hereafter, data writing and reading with respect to the memory 37 by the processing circuit 41 will be explained. Fig. 10 is a figure for explaining data writing and reading with respect to the memory 37 by the processing circuit 41 in the embodiment of the present invention.

The processing circuit 41 performs writing and reading of the rate data RD(Cn/Cm), change value delta R(Cn/Cm)(tc), index data Index(Cn)(tc) and index data ISIndex(Cn)(tc) by the following processing. Also in the embodiments other than this present embodiment, it is the same.

For example the processing circuit 41 performs the predetermined function in the program, accesses the table data TABLE in the memory 37 of the attribute specified with the function based on the key KEY specified with the function, and obtains address ADR corresponding to the key KEY. The attributes concerned are the classification of data, a time chart, etc. Moreover, the address ADR is defined to be specified uniquely by the key KEY.

Next, the processing circuit 41 accesses the memory 37 based on the obtained address ADR. By using such table data TABLE, it can access in a short time at the address ADR in the memory 37 corresponding to the key compared with the case where arrangement is used.

For example, in the reading operation, the processing circuit 41 accesses the above-mentioned address ADR of the memory 37, and reads data DATA memorized at the address. The processing circuit 41 generates the data MAP(KEY, DATA) including the data DATA, and the address ADRx-1 and ADRx+1 which are adjoined to the address ADRx used at this time in the table data TABLE as a return value of the function and memorizes it to the memory 37. In addition, it is possible to include data elements other than the above in the data MAP of a return value.

By this method, the data DATA of the next time can be accessed based on the address ADRx-1, ADRx+1 contained in the MAP data of the present time, and the obtaining address by the table data TABLE becomes unnecessary. Thereby, high speed access is attained.

Moreover, the processing circuit 41 writes the data DATA in address ADR in the memory 37 obtained from the table data TABLE based on the key KEY at the time of writing.

In the present embodiment, the data module DB indicates the data group which performs access to the memory 37 shown in Fig. 10 based on the same table data TABLE. The data module to be used is selected based on the kind of data to be accessed.

First, reading and writing operation to the memory 37 will be explained about the rate data RD(Cn/Cm) of 28 currency pairs.

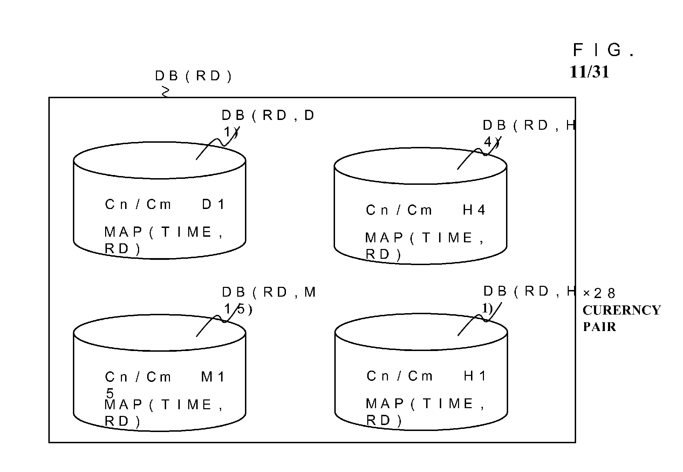

Fig. 11 is a figure for explaining the writing and reading operation of the rate data RD(Cn/Cm).

As shown in Fig. 11, the data module DB for every time chart is memorized in the memory 37 about each currency pair. About one currency pair Cn/Cm, the data module DB of a plurality of the time chart (for example, four) is defined.

As shown in Fig. 11, the data module DB (RD, D1), DB (RD, H4), DB (RD, H1), and DB (RD, M15) of the daily chart (D1), 4 hourly chart (H4), 1 hourly chart (H1), and 15 minutes chart (M15) are defined for the rate data RD(Cn/Cm). Here, the time data tc (TIME) corresponds to the key KEY shown in Fig. 10, and the rate data RD(Cn/Cm) corresponds to the data DATA shown in Fig. 10.

That is, the processing circuit 41 accesses the table data TABLE (RD, time chart) corresponding to the table data TABLE shown in Fig. 10 by using the time data tc as a key, obtains address ADR, and accesses the address ADR in the memory 37. At the time of reading operation, the processing circuit 41 reads the rate data RD(Cn/Cm) from address ADR as data DATA. At the time of writing, the processing circuit 41 writes the rate data RD(Cn/Cm) in address ADR as data DATA. The processing circuit 41 determines the table data TABLE (RD, time chart) to be read from the memory 37 and to be used at the time of reading and writing of the rate data RD(Cn/Cm), based on the time chart data designated together with the time data.

Next, reading and writing operation to the memory 37 will be explained about the change value delta R(Cn/Cm)(tc).

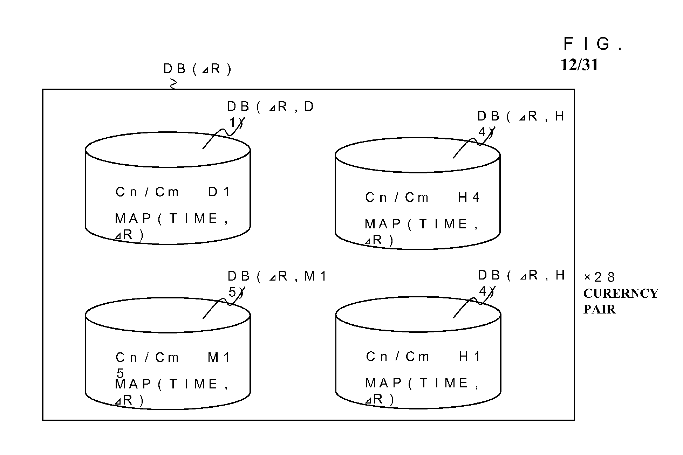

Fig. 12 is a figure for explaining the writing and reading operation of the change value delta R(Cn/Cm)(tc).

As shown in Fig. 12, the data module DB for each time chart about each currency pair are memorized in the memory 37. About each currency pair Cn/Cm, the data module DBs of a plurality of time charts (for example, four) are defined.

As shown in Fig. 12, the data module DB (delta R, D1), DB(delta R,H4), DB(delta R,H1), and DB(delta R, M15) of the daily chart (D1), 4 hourly chart (H4), 1 hourly chart (H1), and 15 minutes chart (M15) are defined for the change value delta R(Cn/Cm)(tc).

Here, the time data tc (TIME) corresponds to the key KEY shown in Fig. 10, and the corrected change value delta CR (Cn/Cm)(tc) corresponds to the data DATA shown in Fig. 10.

That is, the processing circuit 41 obtains the address ADR by accessing the table data TABLE (delta R, time chart) corresponding to the table data TABLE shown in Fig. 10 by using the time data tc as a key, and accesses the address ADR in the memory 37.

At the time of reading operation, the processing circuit 41 reads the change value delta R(Cn/Cm)(tc) from the address ADR as data DATA. At the time of writing, the processing circuit 41 writes change value delta R(Cn/Cm)(tc) in the address ADR as data DATA.

The processing circuit 41 determines the table data TABLE (RD, time chart) to be read from the memory 37 and to be used at the time of reading and writing of the change value delta R(Cn/Cm)(tc), based on the time chart data designated together with the time data.

Note that, it is not necessary to perform processing shown in Fig. 10 about the change value delta R(Cn/Cm)(tc).

Next, reading and writing of the index data Index(Cn)(tc) to the memory 37 will be explained.

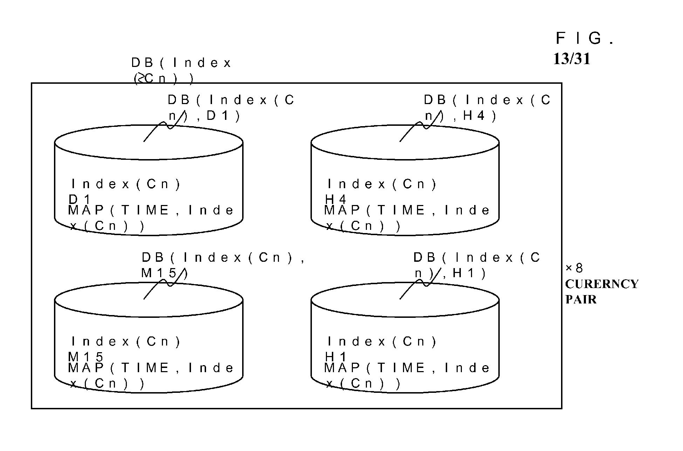

Fig. 13 is a figure for explaining the reading and writing of the index data Index(Cn)(tc) to the memory 37.

As shown in Fig. 13, the data module DB for every time chart about each currency is memorized in the memory 37. About each currency Cn, the data module DBs of a plurality of time chart (for example, four) are defined.

As shown in Fig. 13, the data module DB (index, D1), DB(index,H4), DB(index,H1), and DB(index, M15) of the daily chart (D1), 4 hourly chart (H4), 1 hourly chart (H1), and 15 minutes chart (M15) are defined for the index data Index (Cn)(tc).

Here, the time data tc (TIME) corresponds to the key KEY shown in Fig. 10, and the index data Index(Cn)(tc) corresponds to the data DATA shown in Fig. 10.

That is, the processing circuit 41 obtains the address ADR by accessing the table data TABLE (Index, time chart) corresponding to the table data TABLE shown in Fig. 10 by using the time data tc as a key, and accesses the address ADR in the memory 37.

At the time of reading operation, the processing circuit 41 reads the index data Index(Cn)(tc) from the address ADR as data DATA. At the time of writing, the processing circuit 41 writes index data Index(Cn)(tc) in the address ADR as data DATA.

The processing circuit 41 determines the table data TABLE (Index, time chart) to be read from the memory 37 and to be used at the time of reading and writing of the index data Index(Cn)(tc), based on the time chart data designated together with the time data.

Next, reading and writing of the index data ISIndex(Cn)(tc) to the memory 37 will be explained.

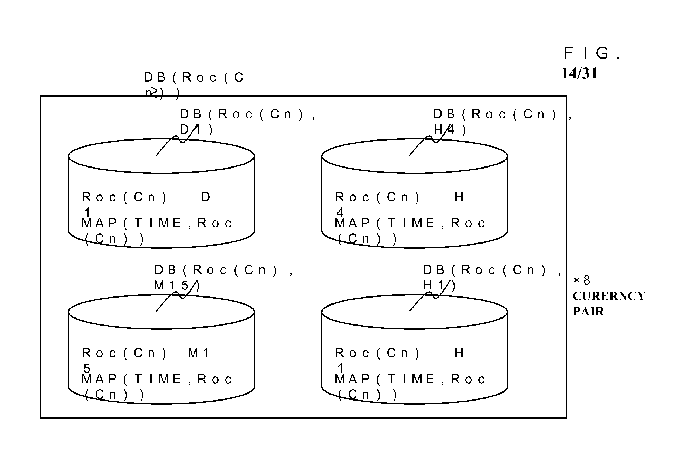

Fig. 14 is a figure for explaining the reading and writing of the index data ISIndex(Cn)(tc) to the memory 37.

The index data ISIndex(Cn)(tc) is written to the memory 37 as the Roc data (DATA) including the index data ISIndex (Cn)(tc) and the x of the index data Index(Cn)(tc) which are used for the calculation of the equation (4).

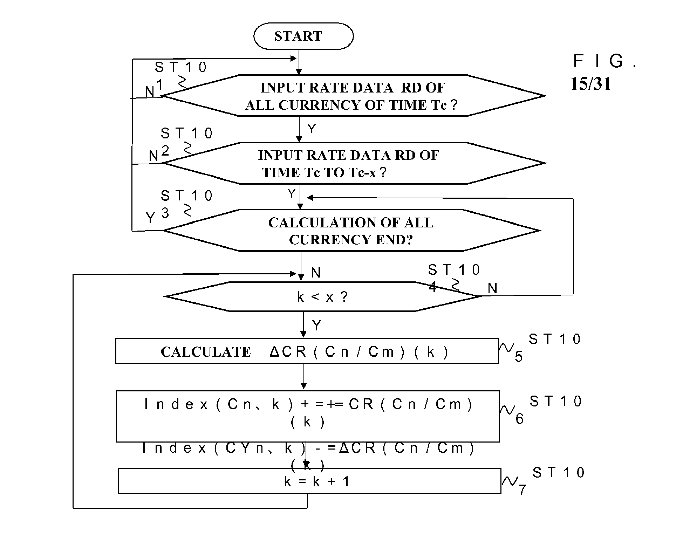

As shown in Fig. 15, the data module DB for every time chart about each currency is memorized to the memory 37. About each currency Cn, the data module DBs of a plurality of time chart (for example, four) are defined.

As shown in Fig. 14, the data module DB (Roc, D1), DB(Roc,H4), DB(Roc,H1), and DB(Roc, M15) of the daily chart (D1), 4 hourly chart (H4), 1 hourly chart (H1), and 15 minutes chart (M15) are defined for the index data ISIndex (Cn)(tc).

Here, the time data tc (TIME) corresponds to the key KEY shown in Fig. 10, and the data Roc(Cn)(tc) corresponds to the data DATA shown in Fig. 10.

That is, the processing circuit 41 obtains the address ADR by accessing the table data TABLE (Roc, time chart) corresponding to the table data TABLE shown in Fig. 10 by using the time data tc as a key, and accesses the address ADR in the memory 37.

At the time of reading operation, the processing circuit 41 reads the data Roc(Cn)(tc) from the address ADR as data DATA. At the time of writing, the processing circuit 41 writes data Roc(Cn)(tc) in the address ADR as data DATA.

The processing circuit 41 determines the table data TABLE (Roc, time chart) to be read from the memory 37 and to be used at the time of reading and writing of the data Roc(Cn)(tc), based on the time chart data designated together with the time data.

Note that, also in the embodiment other than the present embodiment, writing and reading of various data in a memory are performed by the processing shown in the Fig.10 to Fig.14.

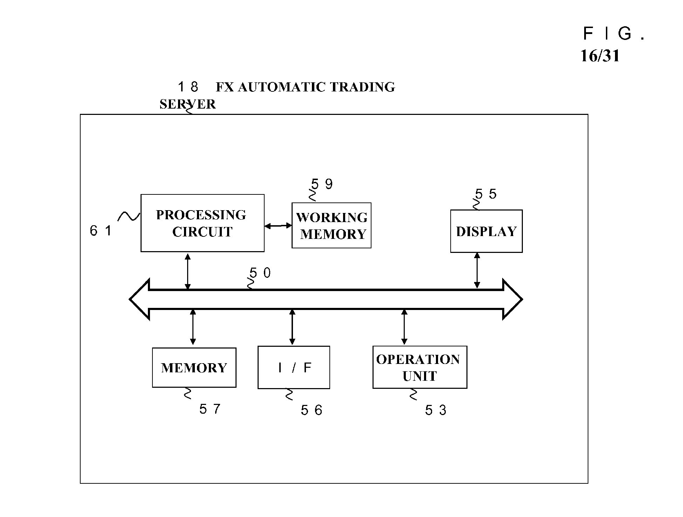

Hereafter, the example of processing of Steps ST1 to ST4 shown in Fig. 16 will be explained.

Fig. 15 is a flow chart for explaining the example of processing of Steps ST1 to ST4 shown in Fig. 16.

Step ST101:

The processing circuit 41 judges whether the rate data RD(Cn/Cm) of all currency pairs of time tc (tc) is memorized in the memory 37. If it judges that the rate data RD(Cn/Cm) is memorized, it will progress to Step ST102.

Step ST102:

The processing circuit 41 judges whether the rate data RD(Cn/Cm) of time t=tc tc-1,....,tc-x which are required for calculation of the index data Index(Cn)(tc) is memorized in the memory 37. If it judges that the [in1 is memorized, it will progress to step ST103.

Step ST103:
The processing circuit 41 judged whether the processing of Steps ST105 and ST106 about all currency pairs ends, and when it is judged that it ends, it progresses to Step ST101. When it is judged that it does not end, It progresses to Step ST104, after selecting a non-ended currency pair and setting it as k= 0.

Step ST104:

The processing circuit 41 judges whether the variable k is less than x, and when it judges that it is right, it will progress to Step ST105.

Step ST105:

Based on the equations (1) and (2), the processing circuit 41 computes the corrected change value delta CR (Cn/Cm) (k), and writes this to the memory 37.

Step ST106:

The processing circuit 41 adds the index data Index(Cn)(k) with the corrected change value delta CR (Cn/Cm)(k). Further the processing circuit 41 subtracts the corrected change value delta CR (Cn/Cm)(k) from the index data Index(Cm)(k).

Step ST107:

The processing circuit 41 carries out the increment of the variable k by only one.

When it becomes k=x, it returns to Step ST103, and the index data Index(Cn)(tc) is memorized in the memory 37 at this time.
According to the method shown in Fig. 15, the corrected change value delta CR (Cn/Cm) calculated in Step ST105 is used for accumulation of the index data Index (Cn)(k) and Index (Cm)(k) at Step ST106. Therefore it is not necessary to calculate the corrected change value delta CR (Cn/Cm)(k) twice unlike the case that the calculation of the index data Index (Cn)(k) and Index (Cm)(k) are performs respectively. Thereby, the amount of operations is reduced.
In the processing circuit 41, the index data Index (USD) (tn) is calculated as follows, for example.
Index(USD)(tn)= delta CR (USD/JPY)(tn)+ delta CR(EUR/USD)(tn)+ delta CR(GBP/USD)(tn)+ delta CR(USD/CHF)(tn) + delta CR(USD/CAD)(tn)+ delta CR(AUD/USD)(tn)+ delta CR(NZD/USD)(tn)
In the processing circuit 41 the index data Index (JPY) (tn) is calculated as follows, for example.
Index(JPY)(tn)= delta CR(USD/JPY)(tn)+ delta CR(EUR/JPY)(tn)+ delta CR(GBP/JPY)(tn)+ delta CR(CHF/JPY)(tn)+ delta CR(CAD/JPY)(tn)+ delta CR(AUD/JPY)(tn)+ delta CR(NZD/JPY)(tn)
[FX automatic trading server 18]
Fig.16 is block diagram of the FX automatic trading server 18 shown in Fig.1.
As shown in Fig.16, the FX automatic trading server 18 has an interface 56, an operating portion 53, a display 55, a memory 57, a working memory 59 and a processing circuit 61, for example.
Here, the interface 56, the operating portion 53, the display 55, the memory 57 and the processing circuit 61 are connected via an internal bus 50.
The interface 56 performs transmission and reception of data and request with the FX index calculation server 16 and the private investor terminal 14 via network 9.
The operating portion 53 is a keyboard, a mouse, etc. for a manager of the FX automatic trading server 18 to operate it.
The display 55 displays the screen according to the display signal from the processing circuit 61.
The memory 57 memorizes the program and data which are used for processing of the processing circuit 61.
The processing circuit 61 generalizes and controls processing of the FX automatic trading server 18.
The data used in the processing circuit 61 and the computed data are temporarily memorized by the memory means of the working memory 59, or the memory 57. Although operation of reading and writing among the processing circuit 61, working memory 59 and memory 57 are not specified in the present embodiment, it is carried out for every processing of the processing circuit 61.
The FX automatic trading server 18 performs the automatic trading of the currency pairs based on the index data Index (Cn) inputted from the FX index calculation server 16.
Hereinafter the operation of the FX automatic trading server 18 shown in Fig.1 will be explained.

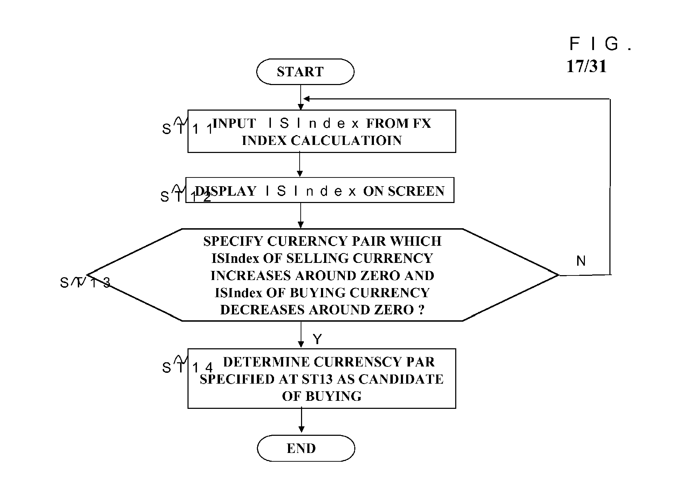

Fig. 17 is a flow chart for explaining the operation of the FX automatic trading server 18 shown in Fig. 1.
Step ST11:
The processing circuit 61 of the FX automatic trading server 18 transmits the request of the index data to the FX index calculation server 16 via interface 56.

The processing circuit 61 writes the data Roc(Cn)(tc) including the index data Index(Cn)(tc)received according to the index data request to the memory 57.

The processing circuit 61 performs writing and reading of the data Roc(Cn)(tc) with respect to the memory 57 by the processing explained in the Fig.14.

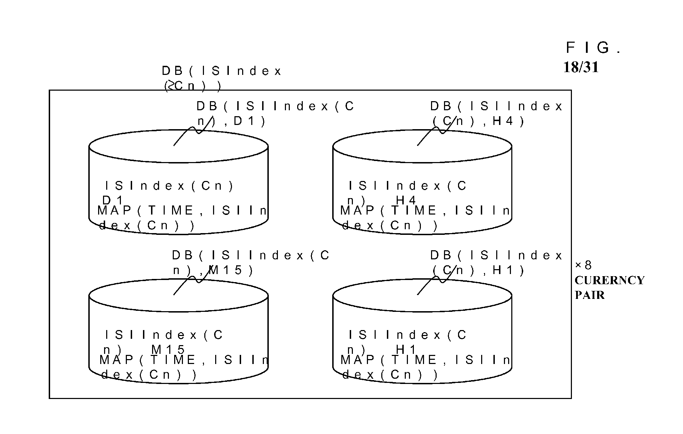

Note that, the processing circuit 61 may receive directly the index data ISIndex(Cn)(tc) and use it as the data DATA as shown in Fig.18.

The embodiment of the present embodiment, the access to the index data ISIndex(Cn)(tc) memorized in the memory 57 by the processing circuit 61 is performed by the processing explained using Fig.10 and Fig.18, etc.

Step ST12:

The processing circuit 61 reads the index data ISIndex(Cn)(tc) in the data Roc(Cn)(tc) which was written to the memory 57, sorts the index data ISIndex(Cn)(tc) of 8 currencies in expensive order, and memorizes a currency strength ranking data indicating currency strength ranking of each time to the memory 37. And the processing circuit 61 generates image data for displaying a currency strength ranking based on the currency strength ranking data and memorize it to the memory 37.

Further, currency ranking strength data is memorized as a data module DB mentioned above for every time chart. The processing circuit 61 designates a time chart and performs reading and the writing of the currency strength ranking data to the memory 37 by the processing explained by using time as a key in Fig. 10.

The processing circuit 61 transmits the generated screen data to the private investor terminal 14, according to the request from the private investor terminal 14.

The processing circuit 31 of the private investor terminal 14 shown in Fig. 4 performs display processing of the screen data inputted from the FX index calculation server 16, and displays the screen according to the screen data on the display 25 shown in Fig. 4.

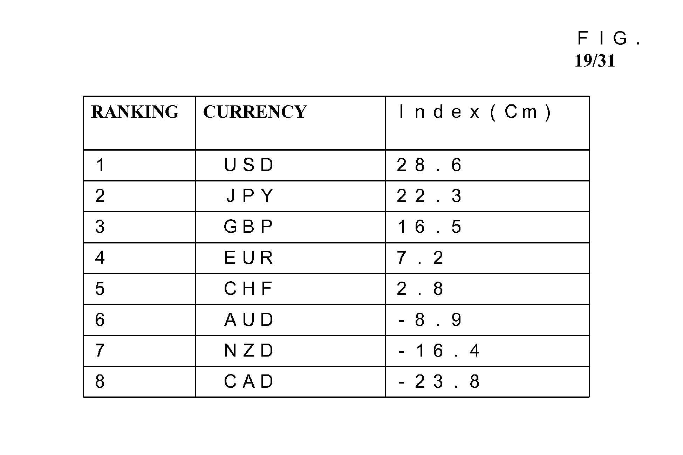

For example, the processing circuit 31 displays the table data shown in Fig. 19 on the display 25. The individual investor can grasp the ranking of change of the strength of each currency easily, by the table data shown in Fig. 19.

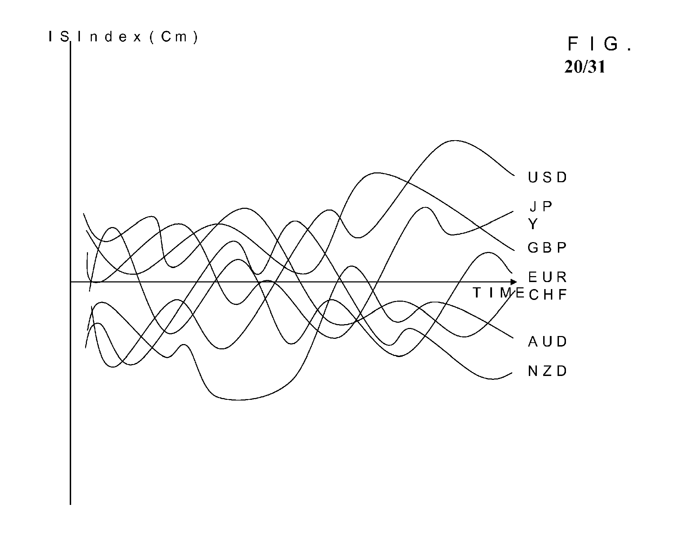

The processing circuit 61 may read the index data ISIndex(Cn) of eight currencies written in the memory 37 at Step ST11 , and displays it by using graph in time sequence. The individual investor can grasp at a glance what change of the strength of each currency has become based on the graph shown in Fig. 20.

The graph shown in Fig. 20 is generated based on the data of the timing of predetermined time intervals, such as a 15 minute chart, a hourly chart and a daily chart, and the time interval is selected by operation of the operating portion 23 shows in Fig. 4 of the individual investor.

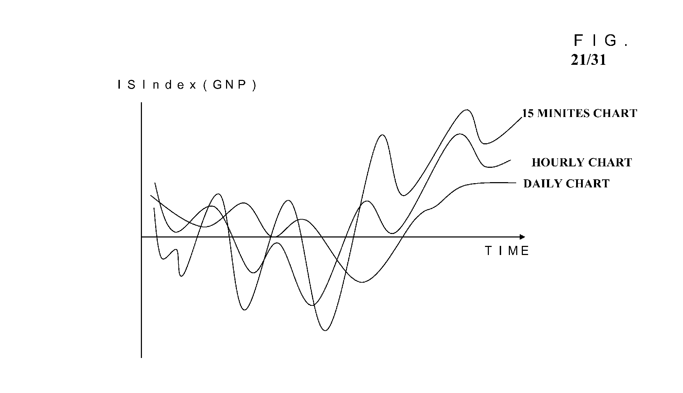

Based on the index data ISIndex(Cn), the processing circuit 41 may display simultaneously the graph of two or more time intervals, such as a 15 minute chart, a hourly chart and a daily chart, about one currency, as shown in Fig. 21.

When the index data ISIndex(Cn) is memorized in the memory 37 shown in Fig.14, the

processing circuit 61 reads the index data ISIndex(Cn) by the processing explained in the Fig.10 and Fig.14, generates image data displaying the change of the indication of each chart in time sequence based on this respectively.

Note that, it is not necessary to perform processing of Step ST12.

Step ST13:

The processing circuit 61 of the FX automatic trading server 18 judges whether the currency pair which satisfies a predetermined conditions among the currency pairs shown in Fig. 3 based on the index data ISIndex(Cn) of eight currencies memorized in the memory 57.

Specifically, the processing circuit 61 specifies the currency pair satisfying the condition that index data ISIndex(Cn) of both of selling currency and buying currency indicates near zero (around zero), the index data ISIndex(Cn) of the buying currency is up-trend, and the selling currency is down-trend.

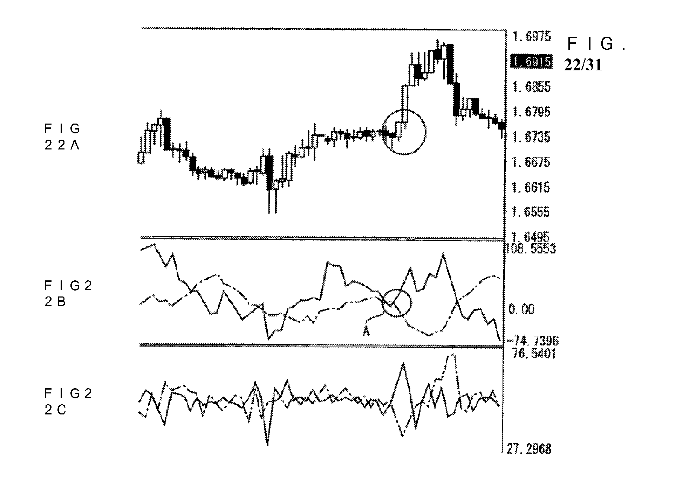

For example, the index data ISIndex (GBP)) at the timing A shown in Fig.22B is up-trend near zero, and the ISIndex (CHF) is down-trend near zero. In this case, the processing circuit 61 specifies the currency pair "GBP/CHF" as a buying candidate.

In addition, the processing circuit 61 computes 10-20% of value of the maximum of the absolute value among the index data ISIndex(Cn) of the eight currencies of a predetermined periods as threshold width, and writes this in the memory 37. The processing circuit 61 writes a first threshold data indicating the value of the threshold width in the plus direction from zero. The processing circuit 61 writes a second threshold data indicating the value of the threshold width in the minus direction from zero.

The processing circuit 61 compares the index data ISIndex(Cn) with the first and second threshold data read from the memory 57. When the index data ISIndex(Cn)is not more than the first threshold data, and index data ISIndex(Cn) is not less than the second threshold data, the processing circuit 61 judges that the index data ISIndex(Cn) is value near zero. The threshold width is updated not according to fixation but according to time.

At this time, about 15% is best mode. The inventor determines the 10-20 % as most effective range based on an actual trade result.

Here, when satisfying such conditions that both of the index data ISIndex(Cn) of selling currency and buying currency indicate near zero, the probability which repeats the up-trend and the down-trend by turns is high. Therefore the condition is applied.

In addition, the processing circuit 61 uses the index data for determination whether near zero or not having shorter plot time width, compared with the plot width used for specifying the currency of up-trend and down-trend. For example, the processing circuit 61 judges whether it is near zero or not based on the hourly chart, judges the trend based on the daily chart.

This is because the trend of the short time of the index data ISIndex(Cn) has a tendency for following trend of long time.

In addition, the up-trend means the high value and low value of the index data ISIndex(Cn) increase (raise), or the value is increasing. The down-trend means the high value and low value of the index data ISIndex(Cn) decrease, or the value is decreasing.

The processing circuit 61 detects the low value and high value of the index data ISIndex(Cn) one by one, and writes them in the memory 57. And the processing circuit 61 reads the high value (low value) from the memory 57, and compares it with the adjoining high value (low value). And when the high value (low value) afterward is higher, it is judged as the high value (low value) of the index data ISIndex(Cn) is increasing. And when the high value (low value) afterward is lower, it is judged as the high value (low value) of the index data ISIndex(Cn) is decreasing. The processing circuit 61 writes the data indicating judgment result to the memory 57.

When the index data ISIndex(Cn) decreases (increases) after it increases (decreases), the high value (low value) is determined at the timing when it decreases (increases) by a predetermined percentage or value from the high value (low value).

The memory 57 memorizes a table data including the item indicating the address in which the index pattern data is memorized in association with the time data indicating the high value or low value of the index data ISIndex(Cn). The the index pattern data includes the index data ISIndex(Cn) of the high value or the low value, and a property indication whether it is the high value or the low value.

When the processing circuit 61 detects the high value or the low value of the index data ISIndex(Cn), the processing circuit 61 adds the item of the high value or the low value to the table data, and memorize the index pattern data corresponding the added item to a predetermined address of the memory 37.

The processing circuit 61 searches the table data read from the memory 57, using the specified time data as a search key, and obtains the address corresponding to the time data concerned. And the processing circuit 61 accesses the obtained address in the memory 57, and reads the index pattern data.

And the processing circuit 61 judges any of up-trend and down-trend the index data ISIndex(Cn) is, using the read index pattern data, based on the size relation of two index data of the high value which related time is adjoined, and the size relation of two index data of the low value with which related time is adjoined.

Further, the processing circuit 61 writes the trend data indicating property whether each currency of each time is up-trend or down-trend based on the judgment.

The processing circuit 61 writes data indicating the currency pairs satisfying the predetermined condition.

In addition, the processing circuit 41 memorized data indicating result of the judgment of the near zero, the trend and the specified currency pair, as the data DATA to the memory 57 by performing the processing shown in Fig. 10 while specifying the time chart and using the time tc as key KEY.

Step ST14:

The processing circuit 61 notifies the currency specified at the Step ST13 as a trading candidate For example, the processing circuit 61 performs processing which displays the currency pair concerned on a web page.

Specifically the processing circuit 61 memorizes the currency pairs specified at Step ST13 as candidate for trading to the memory 57, and transmits the directions signal for buying to the FX dealer server 12.

Thus, the method which determines the currency pair of candidates for trading according to the trend of currency is called a trend follow method.

In addition, in the present embodiment and the other embodiment, the currency pairs which is determined as the trading candidate is written to the memory 57. The currency pair shown in the trading candidate currency pair data memorized in the memory 57 is used as a candidate at the time when a user decides the candidate for trading.

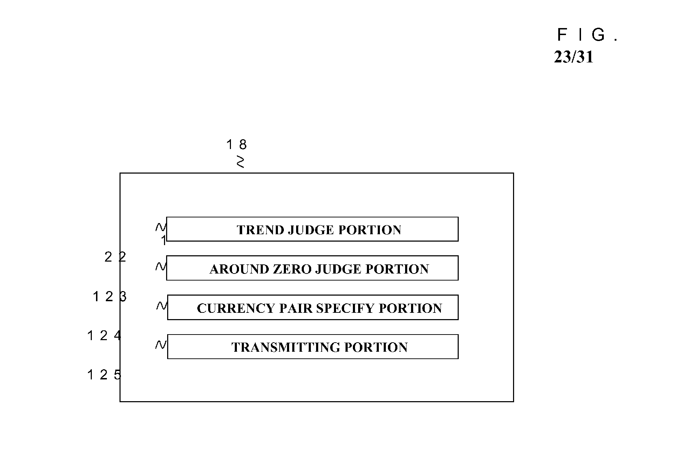

Processing shown in Fig. 17 is realized by the functional module of the trend judge portion 122, the near zero judge portion 123, the currency pair specify portion 124 and the transmitting portion 125 as shown in Fig.23. These functional modules may be realized by the processing of program by the processing circuit 61.

The trend judge portion 122 performs processing of judging the trend at Step ST13. The near zero judge portion 123 performs processing of judging whether near zero or not at Step ST13. The currency pair specify portion 124 performs processing specifying the currency pair of the trading candidate at the Step ST13. The transmitting portion 125 performs processing of transmitting the information of the specified currency pair at the Step ST13.

As explained above, according to the FX index calculation server 16 of the FX processing system 1, index data ISIndex(Cn)(tc) indicating the change of strength of the currencies in time sequence can be calculated based on the rate data RD(Cn/Cm) of 28 currency pairs from the RD generation server 10.

Therefore, the private investor terminal 14 can rank change of the strength of eight currencies to a time series based on the index data ISIndex(Cn)(tc).

Thereby, the FX automatic trading server 18, as mentioned above, based on the index data ISIndex(Cn)(tc), the currency pair which is used for candidate of trading can be determined automatically.

Thus, efficient automatic trading is attained, taking an overall tendency into consideration by determining a currency pair automatically based on the state of the strength among many currency, such as the whole currency or two or more major currency.

Further, according the private investor terminal 14 and the FX automatic trading server 18, it becomes easy to grasp change of rank by displaying visually change of the strength of all currency by using graph based on the index data ISIndex(Cn)(tc).

When drawn toward the upper part from the lower part of graph, signs that become strong gradually are known, and when opposite, the process which becomes weak is known.

Further, when graph of a long time chart such as daily chart indicates increase tendency, the graph of short time chart such as a hourly chart and 15 minutes chart indicates up tendency after down tendency, it is high possibility to take a position in the increase direction.

By using the FX processing system 1, the state of the strength among many currency, such as the whole currency or two or more major currency is known, an overall tendency can be grasped, and efficient trading are attained.

<Second embodiment>

In the present embodiment, the process for determining the currency pair of the trading candidate based on the index data ISIndex at Step ST13 and ST14 shown in Fig.17 of the first embodiment will be explained.

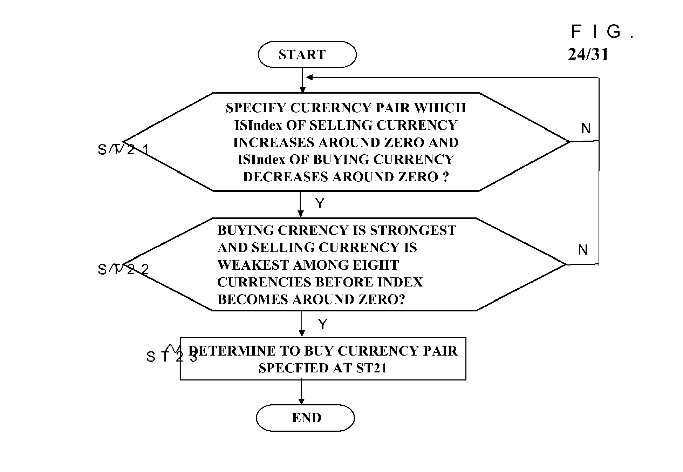

Fig. 24 is a flow chart for explaining the flow of processing of the Steps ST13 and ST14 shown in Fig. 17 in the second embodiment.

As shown in Fig. 24, when specifying the currency pair which the index data ISIndex(Cn) of buying currency is up-trend near zero, and the index data ISIndex(Cn) of selling currency is down-trend near zero, the processing circuit 61 progresses to Step ST22.

In addition, the processing circuit 61 judges whether it is near zero or not, by the same procedure with that of the first embodiment.

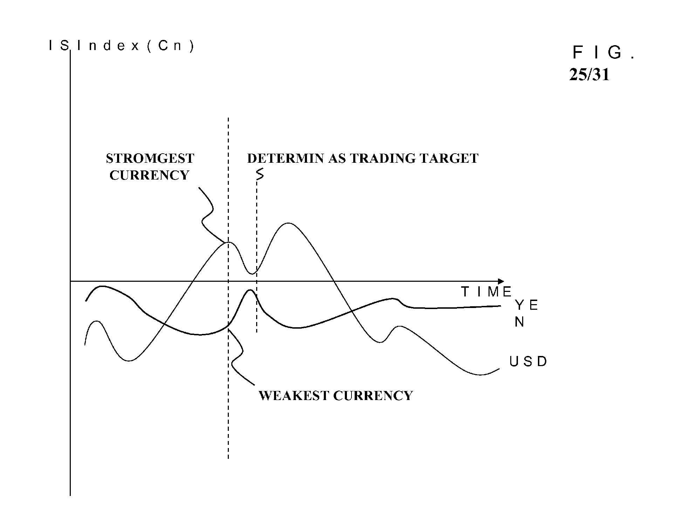

In step ST22, as shown in Fig. 25, the processing circuit 61 judges the following condition for the currency of the currency pair specified at the Step ST21. The condition is that the buying currency is strongest currency among eight currencies and the selling currency is weakest currency among eight currencies before the index data ISIndex(Cn) of the currencies becomes near zero. When the processing circuit 61 judges the condition is satisfied, the currency pair is specified as the trading target at the Step ST23.

At this time, the processing circuit 61 reads the currency strength ranking data from the memory 57 by using the time t as key KEY as shown in Fig.10. The currency strength ranking data indicates the ranking of currency strength for each time. The processing circuit 61 specifies the strongest currency and the weakest currency at time (or within a predetermined time period just before) before becoming near zero among the currency pairs specified at Step ST21, based on the currency strength ranking data. And the processing circuit 61 specifies the currency pair which the buying currency is the strongest currency among the eight currencies and the selling currency is the weakest currencies among the eight currencies, and memorizes the data indicating the specified currency pair to the memory 57.

The processing circuit 61 trades the currency pair specified at Step ST22 automatically (step ST23). Specifically, the processing circuit 61 transmits the directions signal for buying the currency pair specified at Step ST22 to the FX dealer server 12.

Appropriate trading of the currency pair is attained with very high probability by the automatic trading of the present embodiment.

Note that, the processing circuit 61 may specify the currency pair which the ranking of the buying currency is within a predetermined number from the strongest one, and the ranking of the selling currency is within a predetermined number from the weakest one.

<Third embodiment>

In the present embodiment, the other process for determining the currency pair of the trading candidate based on the index data ISIndex(Cn) at Step ST13 and ST14 shown in Fig.17 of the first embodiment will be explained.

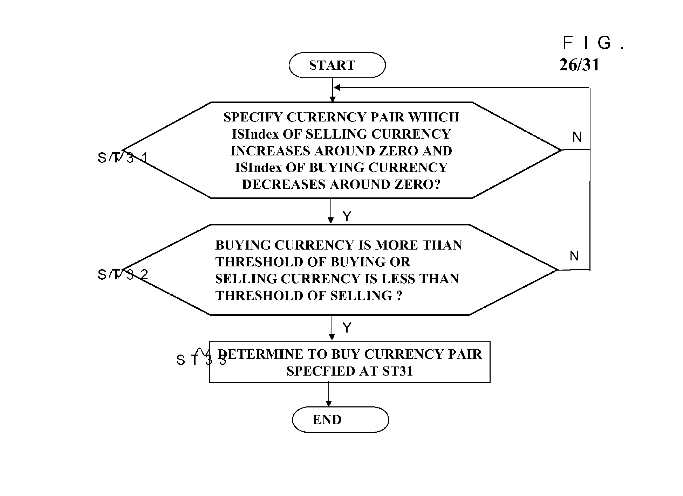

Fig. 26 is a flow chart for explaining the flow of processing of the Steps ST13 and ST14 shown in Fig. 17 in the third embodiment.

As shown in Fig. 26, when satisfying the condition that the currency pair which the index data ISIndex(Cn) of buying currency is up-trend near zero, and the index data ISIndex(Cn) of selling currency is down-trend near zero, the processing circuit 61 progresses to Step ST32.

In addition, the processing circuit 61 judges whether it is near zero, by the same procedure with the first embodiment.

The processing circuit 61 judges whether the condition that the buying currency of the currency pair specified at Step ST31 is more than a threshold of buying currency, or the selling currency of the currency pair is less than a threshold of selling currency, as shown in Fig.24.

And when the processing circuit 61 judges the condition is satisfied, the processing circuit 61 specifies the currency pair as a candidate for trading at Step ST33.

Specifically the processing circuit 61 compares the index data ISIndex(Cn) of the buying currency of currency pair satisfying the condition of Step ST31 which is read from the memory 57 and the threshold of buying currency read from the memory 57. Then the processing circuit 61 judges the condition that the buying currency is more than the threshold of buying currency is satisfied and writes the information indicating the currency pair to the memory 57, when the condition that the index data ISIndex(Cn) is more than the threshold of buying currency is satisfied (Step ST32).

Further, the processing circuit 61 compares the index data ISIndex(Cn) of the selling currency of currency pair satisfying the condition of Step ST31 which is read from the memory 57 and the threshold of selling currency read from the memory 57. Then the processing circuit 61 judges the condition that the selling currency is less than the threshold of selling currency is satisfied and writes the information indicating the currency pair to the memory 57, when the condition that the index data ISIndex(Cn) is less than the threshold of selling currency is satisfied (Step ST32).

The processing circuit 61 performs trading of the currency pair specified at Step ST31 when both of condition that buying currency is more than the threshold of buying currency and condition that selling currency is less than the threshold of selling currency are satisfied, or any of one condition is satisfied (Step ST33).

At this time, the processing circuit 61 read the threshold of buying currency and the threshold of selling currency (DATA) from the memory 57 by using time t as key KEY as shown in Fig.10.

As described above the condition that buying currency is more than the threshold of buying currency or the condition that selling currency is less than the threshold of selling currency is used. The reason of this is the possibility that the trend after change is maintained is high when the condition is satisfied.

Note that, the value of the threshold of buying currency and the threshold of selling currency are determined by performing statistics processing base on actual trading data. For example, 60 to 80 % of absolute value of maximum and minimum of predetermined period is continued to be calculated by the processing circuit 61 as the threshold.

In the present embodiment, the index data of longer time chart than the index data used for judgment of the near zero is used for comparison with the threshold of buying currency and the threshold of selling currency.

Appropriate trading of the currency pair is attained with very high probability by the automatic trading of the present embodiment.

<Fourth embodiment>

In the present embodiment, the other process for determining the currency pair of the trading candidate based on the index data ISIndex(Cn) at Steps ST13 and ST14 shown in Fig.17 of the first embodiment will be explained.

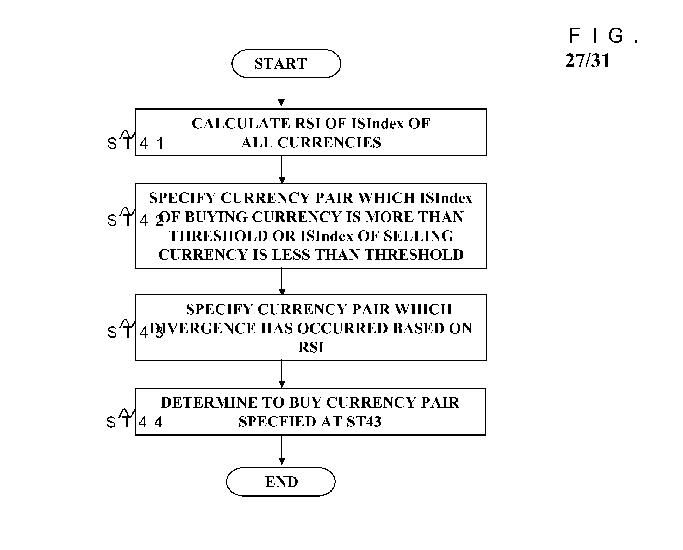

Fig. 27 is a flow chart for explaining the flow of processing of the Steps ST13 and ST14 shown in Fig. 17 in the fourth embodiment.

Step ST41:

The processing circuit 61 of the FX automatic trading server 18 shown in Fig.16 reads the index data ISIndex (Cn)(tc) of eight currencies from the memory 57 and calculates an RSI value (Cn)(tc) for each index data. This reading operation is performs by the processing described in Fig.11 and Fig.14. The RSI value (Cn)(tc) corresponds to example of the trend change data of the present invention.

The relative strength index (RSI) is calculated about first time by "RSI=A/(A+B)*100". Here, the "A" is an average value of gain (up width) of the index data ISIndex(Cn) of a predetermined period "y". The "B" is an average value of loss (down width) of the index data ISIndex(Cn) of a predetermined period "y".

The RSI is calculated for second time and later by "RSI=PA/(PA+PB) x100".

Here, the "PA" is calculated by "{an average gain of the index data ISIndex(Cn) of the precedent time * (y-1) + a gain of the index data ISIndex(Cn) of the present time}/y". The "PB" is calculated by "{an average loss of the index data ISIndex(Cn) of the precedent time * (y-1) + a loss of the index data ISIndex(Cn) of the present time}/y". Here the time is day interval in the case of daily chart, and 15 minutes interval in the case of 15 minutes chart. When the RSI value is not more than "30" it means over selling, and when the RSI value is not less than 70, it means over buying.

In addition, although up and down trend of the index data ISIndex(Cn) are judged based on the RSI value in the present embodiment, it may be judged based on the technique of others, such as MACD (Moving Average Convergence Divergence Trading Method), RCI (Rank Correlation Index), Williams %R, and a Borinjarband.

Step ST42:

The processing circuit 61 reads the index data ISIndex(Cn) of eight currencies from the memory 57, and determined currency pairs which the index data ISIndex(Cn) of the buying currency thereof is more the threshold of buying currency, or the index data ISIndex(Cn) of the selling currency thereof is less the threshold of selling currency based on the index data ISIndex(Cn). The processing is the same with that of Step ST32 described above.

Step ST43:

The processing circuit 61 reads the RSI value (Cn)(tc) computed at Step ST41 from the memory 57, and judges whether a divergence has occurred in the buying currency which is more than the threshold of buying currency or the selling currency which is less than the threshold of selling currency based on the RSI value (Cn)(tc) at Step ST42. Then the processing circuit 61 specifies the currency pair in which the divergence has occurred. The processing circuit 61 memorizes the information indicating the specified currency pair.
Specifically the processing circuit 61 judges the divergence has occurred about each currency when although the index data ISIndex(Cn)(tc) is up-trend, the RSI value (Cn)(tc) decreases.
On the other hand, the processing circuit 61 judges the divergence has occurred about each currency when although the index data ISIndex(Cn)(tc) is down-trend, the RSI value (Cn)(tc) increases.
The processing circuit 61 judges the trend of the index data ISIndex(Cn)(tc) by the same method with the first embodiment. Further the processing circuit 61 compares two RSI values (Cn)(tc) of adjoining time. And the processing circuit 61 determines it is up-trend when the value of the later time is larger, and determines it is down-trend when the value of the precedent time is larger. The processing circuit 61 memorizes information indicating increase or decrease of the RSI value (Cn)(tc) about each time to the memory 57 in the state which is readable by using the time data as key.

Step ST44:

The processing circuit 61 determines the currency pair which is judged that the condition is satisfied at Step ST43 as a trading target.
Note that, the processing circuit 61 may determine the trading target as follows. At this time, the processing circuit 61 reads the trend data from the memory 57 and judges the up and down trend used for the following processing based the trend data.
That is, the processing circuit 61 determines automatically the currency pair of selling target and the currency of buying target as follows, when there are both of the currency in which the divergence has occurred in the index data ISIndex(Cn)(tc) while the up-trend, and the currency in which the divergence has occurred in the index data ISIndex (Cn)(tc) while the downtrend trend.
The processing circuit 61 determines the currency pair of buying target which the currency Cn thereof is down-trend and the divergence has occurred, and the currency Cm thereof is up-trend and divergence has occurred among the currency pair Cn/Cm.
On the other hand, the processing circuit 61 determines the currency pair of selling target which the currency Cn thereof is up-trend and the divergence has occurred, and the currency Cm thereof is down-trend and divergence has occurred.
Below operation of reading and writing of the RSI value (Cn)(tc) with respect to the memory 57 by the processing circuit 61 will be explained.

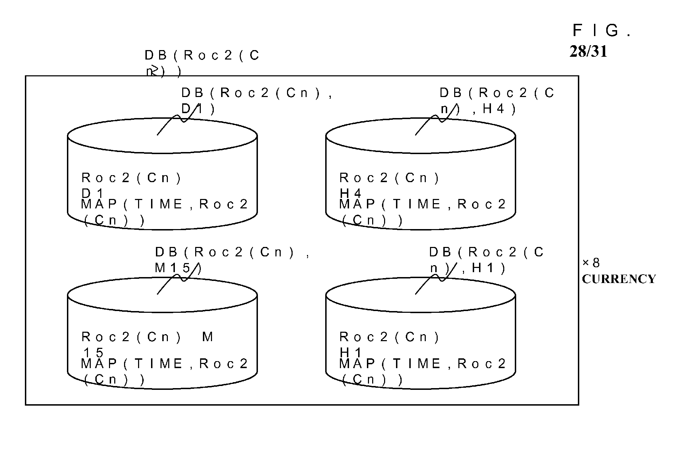

Fig.28 is a view for explaining the operation of reading and writing of the RSI value (Cn)(tc) with respect to the memory 57 by the processing circuit 61.
The RSI value (Cn)(tc) is written to the memory 57 as Roc 2 data (DATA) including the RSI value (Cn)(tc), the index data ISIndex(Cn) of the "y+1" period which is used for the calculation, the RSI value (new), a gain of average RSI, and a loss of average RSI.
As shown in Fig.28, the data module DBs for every time chart about each currencies are memorized in the memory 57. In the present embodiment, the data module DB indicates the data group which performs access to the memory 37 based on the same table data TABLE. About one currency Cn, the data module DBs of a plurality of time charts (for example, four) are defined.
As shown in Fig. 28, the data module DB (Roc2, D1), DB (Roc2, H4), DB (Roc2, H1), and DB (Roc2, M15) of a daily chart (D1), a 4-hour chart (H4), a hourly chart (H2), and a 15-minute chart (M15) are defined for the RSI value (Cn)(tc).
Here the time data tc (TIME) corresponds to the key KEY shown in Fig.10, and the Roc2(Cn)(tc) corresponds to the data DATA shown in Fig.10.

That is, the processing circuit 61 accesses to the table data TABLE (Roc2, time chart) corresponding to the table data shown in Fig.10 to obtain the address ADR, and accesses the address ADR in the memory 57.

When performing reading operation, the processing circuit 61 reads the data Roc(Cn)(tc) as the data DATA from the address ADR. When performing writing operation, the processing circuit 61 writes the data Roc(Cn)(tc) as the data DATA from the address ADR. The processing circuit 61 determines the time chart of the table data TABLE (Roc2, time chart) to read from the memory 37 and use, based on the time chart data specified together with time data.

Further, the processing circuit 61 may determine the candidate for trading, as shown below.

That is, the processing circuit 61 determines the currency pair of target for buying which the currency Cn is down-trend and the divergence has occurred and the currency Cm has no trend change among the currency pair Cn/Cm shown in Fig.3.

The processing circuit 61 determines as target for buying the currency pair which the currency Cn is up-trend and divergence has occurred, the currency Cm is no trend change among the currency pair Cn/Cm shown in Fig.3.

The processing circuit 61 determines as target for buying the currency pair which the currency Cn is no trend change, the currency Cm is up-trend and divergence has occurred among the currency pair Cn/Cm shown in Fig.3.

The processing circuit 61 determines as target for selling the currency pair which the currency Cn is no trend change, the currency Cm is down-trend and divergence has occurred among the currency pair Cn/Cm shown in Fig.3.

Thus, the method which determines the currency pair for trading based on divergence occurred in the trend of currency is called a contorian method.

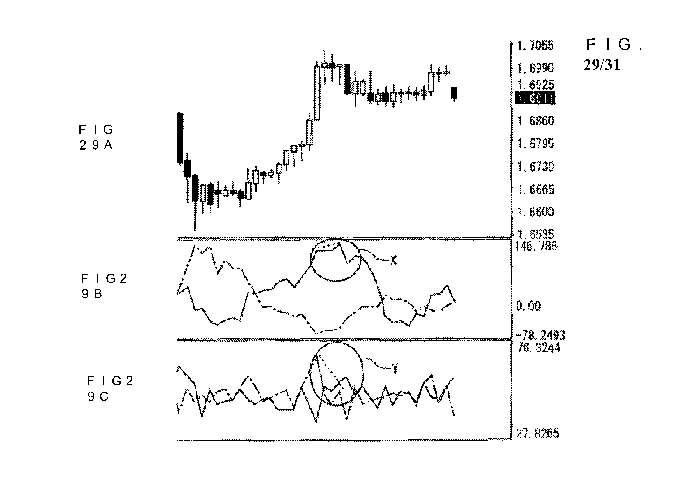

The examples shown in Fig.20A, Fig.29B and Fig.29C explain the case that trading is performed by using the feature that the index data ISIndex(Cn) is easy to be reversed when the divergence has occurred as shown in Fig.29C at the timing the index data ISIndex(Cn)(tc) is over "100" in plus or minus direction.

That is, the index data Index(Cn)(tc) of the currency (GBP) is over plus "100". Then although the GBP is strong, the value of the RSI value (GBP) decreases. Since the situation which the GBP becomes weak and the CHF becomes strong should occur, the trading taking the position which sells GBP/CHF is performed. The GBP/CHF is falling also on the chart shown in Fig. 29A.

Appropriate trading of the currency pair is attained with very high probability by the automatic trading of the present embodiment.

<Fifth embodiment>

In the present embodiment, the other process for determining the currency pair of the trading candidate based on the index data ISIndex(Cn) at Steps ST13 and ST14 shown in Fig.17 of the first embodiment will be explained.

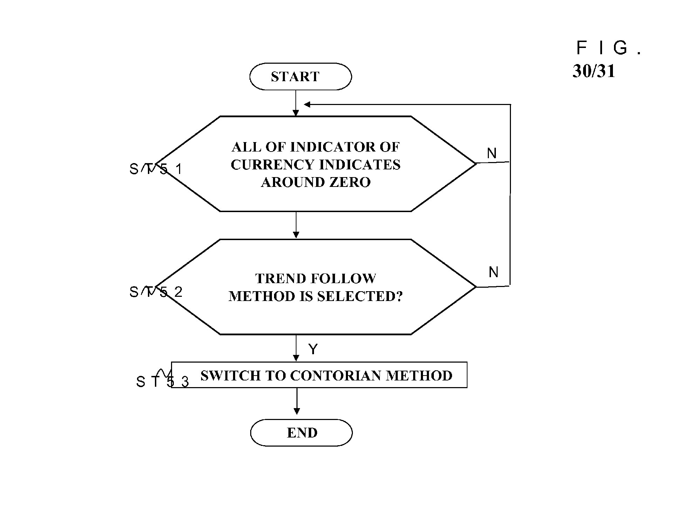

Fig. 30 is a flow chart for explaining the flow of processing of the Steps ST13 and ST14 shown in Fig. 17 in the fifth embodiment.

Step ST51:

The processing circuit 61 reads the index data ISIndex(Cn)(tc) of the eight currencies from the memory 57 and judges whether all of the index data ISIndex(Cn)(tc) are near zero. And the processing circuit 61 proceeds Step ST52 when judging that all of the index data ISIndex(Cn)(tc) are near zero.
Note that, the processing circuit 61 judges whether it is near zero or not by the same method of the first embodiment.

Step ST52:

The processing circuit 61 judges whether the trend follow method explained in the first embodiment is adopted or not in the automatic trading, proceeds to the Step ST53 when it has judges it is correct, and proceeds to the Step 51 when it has judges it is not correct. Note that, method data indication any of the method is adopted is memorized in the memory 57. The processing circuit 61 reads the method data from the memory 57 and determined the adopted method. Further the processing circuit 61 updates the method data when the adapted method has changed.

Step ST53:

The processing circuit 61 switches the method of automatic trading to the contorian method explained in the fourth embodiment.
The processing circuit 61 switches to the trend follow method when any of the indicator of the plurality of currencies become outside of the near zero while adopting the contrian method.
Since it is easy to change without the trend of the index data of each currency maintaining for a long period when the index data of all the currency indicates near zero, prediction of the contorian method comes true in high probability. Therefore, it is effective to switch such a method of trading automatically in order to attain suitable automatic trading.

<Sixth embodiment>

In the present embodiment, the other process for determining the currency pair of the trading candidate based on the index data ISIndex(Cn) at Steps ST13 and ST14 shown in Fig.17 of the first embodiment will be explained.
Some of the currency pair Cn/Cm has a correlation with other currency pair Cn/Cm. The correlation data indicating such correlation is determined statistically in advance, and is memorized in the memory 57 shown in Fig. 16 with a correlation coefficient. The processing circuit 61 reads the correlation data from the memory 57, and specifies correlation based on it.
For example, a currency pair "USD/CAD" and "NZD/USD" have a relation of order correlation. That is, if "USD/CAD" increases or decreases, "NZD/USD" will increases or decreases. Further, there is a relation of negative correlation between the currency pair "USD/JPY" and "USD/CAD". That is, if "USD/JPY" increases or decreases, "USD/CAD" will decreases of increases.
By the way, the following matter is obtained based on the correlation described above.
Namely, when there is a relation of order correlation between currency pair "C1/C2" and ""C3/C1 ", theoretically, the strength of currency should be "C1, C2, C3", or "C1, C3, C2" in weak order. Therefore, the strength of currency cannot be "C2, C1, C3", or "C3, C1, C2" in weak order.
The processing circuit 61 of the FX automatic trading server 18 shown in Fig. 16, based on the correlation coefficient (correlation data) between the currency pairs "Cn/Cm" shown in Fig. 3 memorized in the memory 57 mentioned above, generates the list data of currency strength ranking pattern data which is low possibility in the relation of currency strength described above, and memorizes it in the memory 57.
The list data indicates the ranking (high and low) of the low possibility by associating the information of two currencies and the order information thereof (indicator of which currency is higher).

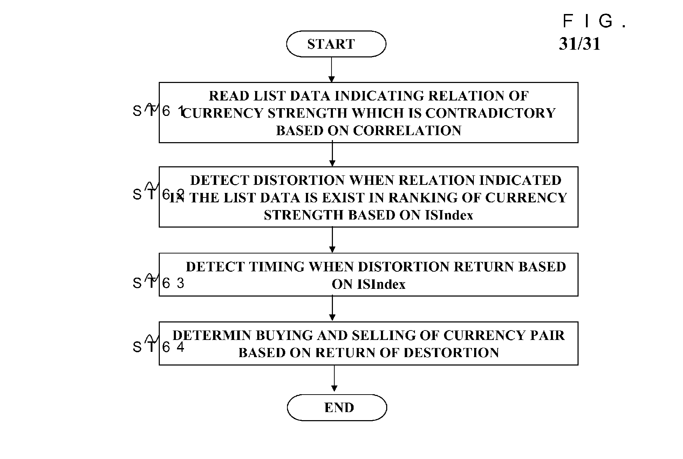

Fig. 31 is a flow chart for explaining the flow of processing of Step ST6 shown in Fig. 8 in the sixth embodiment of the present invention.

Step ST61:

The processing circuit 61 of the FX automatic trading server 18 shown in Fig. 16 reads the list data mentioned above from the memory 27.

Step ST62:

The processing circuit 61 reads the index data ISIndex(Cn)(tc) from the memory 57, and judges the ranking pattern indicated in the list data read at Step ST61 is existed in the ranking pattern in the currency strength ranking data indicating the currency strength shown in Fig.19 based on the index data ISIndex(Cn)(tc). The processing circuit 61 judges it as distortion when the ranking pattern is existed. The processing circuit 61 writes the currency used as the distorted factor concerned in the memory 57 with the information which shows the ranking.
Specifically, it judges whether the processing circuit 61 extracts the information which
shows the ranking about two currencies which serves as the currency combination about all of the combination of currencies of the ranking pattern, and judges whether the information which is the same with the information indicated in the list data is existed among the extracted information. The processing circuit 61 determines that the combination of the currency pair corresponding to the information is existed in the ranking pattern as distortion, when the same information exists.
Note that, the processing circuit 61 performs the reading the currency strength ranking data of each time from the memory 57 by the processing shown in Fig.10.

Step ST63:

The processing circuit 61 monitors the index data ISIndex(Cn)(tc) generated by the FX index calculation server 16, and detects the timing when the distortion detected at Step ST62 return.
Specifically, the processing circuit 61 detects the timing which the ranking pattern detected as the distortion in Step ST62 mentioned above returns to the right ranking pattern theoretically.

Step ST64:

The processing circuit 61 determines the currency pair for target of selling based on the return of the ranking pattern detected at Step ST63. The processing circuit 61 specified the currency pair of the currencies by which the distortion disappeared, and write the information indicating the currency pair to the memory 57.

For example, the processing circuit 61 determines as a target of buying the currency pair which the strength ranking of the currency Cn will increase and the strength ranking of the currency Cm will decrease among the currency pair Cn/Cm.

Further, the processing circuit 61 determines as a target of selling the currency pair which the strength ranking of the currency Cn will decrease and the strength ranking of the currency Cm will increase among the currency pair Cn/Cm.

For example, the trading target data indicating the return of the ranking pattern and the candidates of trading target corresponding to the return is memorized in the memory 57.

The processing circuit 61 determines the buying and selling of the currency pair based in the trading target data.

Appropriate trading of the currency pair is attained with very high probability by the automatic trading of the present embodiment.

<Other embodiment>

It is assumed that the currency Cmax is defined as the currency which the index data Index (Cm) is maximum (it is mostly shifted to the direction becoming strong), and the currency Cminx is defined as the currency which the index data Index (Cm) is minimum (it is mostly shifted to the direction becoming weak). The processing circuit 61 of the FX automatic trading server 18 shown in Fig.16 specifies the currency pair (Cmax/Cmin) and orders automatically buying the currency pair (Cmax/Cmin)

This invention is not limited in the embodiment mentioned above. Namely, regarding the component in the embodiment mentioned above, a person skilled in the art can do various changes, combination, sub-combination and substitution in the technical or equivalent scope of this invention.

In the present embodiment, the case that the processing of generating the index data Index (Cm) is performed by the FX index calculation server 16, and the processing of trading of the currency pair are performed by the FX automatic trading server 18.

However, these processing may be performed by a single server or the private investor terminal 14.

Further, it may defined the change value delta R(Cn/Cm)(tc) as shown the following equation (5). As a result, the currency becomes stronger as the value of the index data index data ISIndex(Cn)(tc) becomes smaller.

[Equation 5]

$$\text{delta } R(Cn/Cm)(tc) = RD(Cn/Cm)(tc - \text{delta} t) - RD(Cn/Cm)(tc) \quad \dots (5)$$

Further, although the case where the currency pair of buying target is specified is explained with the embodiment described above, a currency pair of selling target may be specified by performing the processing described above by using the selling currency and the buying currency reverse.

The information of currency pair specified as the selling currency and the buying currency may be used for the instruction of selling or buying. Further this information may be displayed on the screen, and user may select currency pair based on the displayed information.

**Claims**

1. A currency pair trading support apparatus, comprising:

a memory storing an index data calculated for each time of a predetermined time interval by calculating a change data indicating change within the predetermined time interval of a rate data about a plurality of currency pairs respectively on the basis of the rate data indicating a trading rate of the currency pair in time sequence and accumulating the change data of the currency pairs which target currency is a buying currency or a selling currency in the currency pairs about each currency which is element of the currency pairs; a reader reading the index data from the memory on the basis of the time data;

a trend judger judging whether each currency in each time is up-trend or down-trend based on the index data;
a near zero judger judging whether the index data has value of a predetermined range near zero;
a condition judger judging whether a condition that the index data of both of the sell currency and the buy currency indicate value of a predetermined range near zero, the sell currency is down-trend and the buy currency is up-trend is satisfied or not, and writing an information indicating the currency pair to the memory when the condition is satisfied; and
an output interface outputting an information indicating the currency pair written to the memory as a trading candidate.

2. A currency pair trading support apparatus of claim 1, wherein
the memory memorizes further a first table data indicating an address of the memory in which the index data of the time data is memorized in association with the time data,
the reader searches the first table data read from the memory, using a specified time data as a search key, obtains the address corresponding to the time data, and accesses the obtained address in the memory to read the index data.

3. A currency pair trading support apparatus of claim 1, wherein
the memory memorizes a second table data including items indicating a time data indicating time of high value and low value of the index data in association with an address in which a index pattern data which is related to the time data is memorized,
the index pattern data includes the index data of the high value or the low value and an information indicating any of property of the high value and low value,
the trend judger adds the item of the detected the high value or the low value to the second table data when detecting the high value or the low value of the index data, memorized the index pattern data relating to the added item into a predetermined address of the memory, and
the trend judger searches the address relating to the time data using the time data as search key from the second data table read from the memory to obtain the address relating to the time data, accesses to the obtained address in the memory to read the index pattern data, and judges whether the currency is up-trend or down-trend based on size relation between two of the high values of adjacent time and size relation between two of the low values of adjacent time.

4. A currency pair trading support apparatus of claim 1, wherein
the near zero judger reads the index data of all the currencies about a plurality of time in a predetermined period before a designated time, specifies a max value of absolute value of the read index data, calculates any % between 10 and 20 % of the specified max value as a threshold value range, determines a first threshold value which is positioned in plus direction from zero by the threshold value range and a second threshold value which is positioned in minus direction from zero by the threshold value range to write it to the memory, compares the read index data and both of the first threshold value and the second threshold value, judges that it is the near zero when the index data is between the first threshold value and second threshold value.

5. A currency pair trading support apparatus of claim 1, wherein
the memory memorizes the index data of a plurality of time charts and the first table data relating to the plurality of time charts,
the trend judger judges the trend of each currency of each time based on the index data read from the memory by using the first table data of a first time chart read from the memory,
the near zero judger judges whether the index data read from the memory indicates value in a predetermined range near zero by using the first table data of second time chart which is read from the memory and is shorter than the first time chart.

6. A currency pair trading support apparatus of claim 1, further comprising a ranking attacher performing sort processing to the index data read by the reader, generating a currency strength ranking data indicating ranking of the currency strength based on ranking of the sorted index data and writing the currency strength ranking data to the memory, wherein
the condition judger specifies a strongest currency and a weakest currency based on the currency strength ranking data read from the memory, and specifies the currency pair which the buying currency is strongest before the index data of the buying currency becomes to the near zero, and the selling currency is weakest before the index data of the buying currency becomes to the near zero.

7. A currency pair trading support apparatus of claim 1, wherein,

the memory memorizes a threshold of the buying currency and a threshold of selling currency,

the condition judger compares the index data of the buying currency and the threshold of the buying currency, compares the index data of the selling currency and the threshold of the selling currency, and specifies the currency pair which satisfy a condition that the buying currency keeps up-trend and becomes more than the threshold of the buying currency and the selling currency keeps down-trend and becomes less than the threshold of the selling currency among the currency pairs which are memorized as the trading candidate.

8. A currency pair trading support apparatus of claim 7, wherein,

the condition judger compares the index data of the buying currency and the threshold of the buying currency, compares the index data of the selling currency and the threshold of the selling currency, by using the index data of longer time chart than the time chart used for the judgment of the near zero.

9. A currency pair trading support apparatus of claim 1, further comprising,

a trend change data calculator calculating a trend change data which is a technical index of oscillator system based on the index data of the plurality of currencies read from the reader, and

a divergence detector judging whether a divergence has occurred or not based on the index data and the trend change data,

wherein

the condition judger specifies the currency pair which the divergence has occurred in the buying currency or the selling as a trading candidate.

10. A currency pair trading support apparatus of claim 9, wherein

the trend change data calculator comprise,

a first calculator calculating an average gain "A" of the index data of a predetermined period "y",

a second calculator calculating an average loss "B" of the index data of the predetermined period "y",

a third calculator calculating the trend change data of a first time by dividing the "A" by a result of adding "A" and "B",

a fourth calculator calculating "PA" by multiplying an average gain of the index data of precedent time with "y-1", adding a gain of the index data of the present time, and dividing the result of the adding by "y",

a fifth calculator calculating "PB" by multiplying an average loss of the index data of precedent time with "y-1", adding a loss of the index data of the present time, and dividing the result of the adding by "y", and

a sixth calculator calculating the trend change data of second time and later by dividing the "PA" by a result of adding "PA" and "PB".

11. A currency pair trading support apparatus of claim 10, wherein

the memory further memorizes a third table data indicating an address of the memory in which the trend change data is memorized in association with the time data,

the condition judger searches the third table data read from the memory by using a designated time data as a search key to obtain the address relating to the time data, and accesses the obtained address of the memory to read the trend change data.

12. A currency pair trading support apparatus of claim 9, wherein

the divergence detector judges that the divergence has occurred when the index data is up-trend and the trend change data decreases, or when the index data is down-trend and the trend change data increases.

13. A currency pair trading support apparatus of claim 9, wherein

the condition judger switches a trend follow method which specifies the currency satisfying condition that the buying currency is down-trend and the selling currency is up-trend, to a contorian method which specifies the currency which the divergence has occurred in the buying currency or selling currency.

14. A currency pair trading support apparatus of claim 1, further comprising,

a ranking generator ranking of strength of the plurality of currencies base on the index data;

a reader reading a list data indicating a list of relation of currencies strength which is low possibility based on a predetermined correlation relation of currency pair from a memory of the computer;

a distortion detector detecting a distortion when existing the relation of the currency strength indicated in the list in a result of the ranking with reference to the list data; and

a distortion disappearing detector detecting a disappearance of the distortion by monitoring the ranking of the plurality of currencies generated by the ranking generator;

wherein

the condition judger specifies the currency pair which the distortion of the currencies has disappeared as target for trading when the disappearance of the distortion is detected by the distortion disappearing detector.

15. A currency pair trading support apparatus of claim 1, further comprising,

an interface inputting an rate data indicating trading rate of the currency pair in time sequence;

a change data calculator reading a rate value of rate data of each time to which is a predetermined period is a assigned from the memory, calculating change of the rate values of adjoining time, write the result of the calculation to the memory as a change data indicating change value of predetermined time width;

an element index data calculator reading the change data of a predetermined time of all the currency pairs which a designated currency is buying currency or selling currency among all the currency pairs, and calculating an element index data by accumulating the change data read from the memory;

a writer obtaining addresses in the memory specified uniquely by using a designated currency information and designated time information as key based on the table data writing the element index data to the obtained address in the memory;

a reader obtaining the address specified uniquely using the currency information and the time information as key based on the table data with respect to a plurality of time relating to a the designated time information, and reading the plurality of element index data from the address of the memory relating to the plurality of time; and

a index data calculator calculating the index data based on the plurality of element index data read from the memory.

16. A currency pair trading support apparatus of claim 15, further comprising,

a writer writing data including the index data, the element index data used of the calculation of the index data and address of an index data of time which is adjoined to time of the index data to the memory together with a table data in which the address can be obtained by using time as key.

17. A currency pair trading support apparatus, comprising:

a memory storing an index data calculated for each time of a predetermined time interval by calculating a change data indicating change within the predetermined time interval of a rate data about a plurality of currency pairs respectively on the basis of the rate data indicating a trading rate of the currency pair in time sequence and accumulating the change data of the currency pairs which target currency is a buying currency or a selling currency in the currency pairs about each currency which is element of the currency pairs; a reader reading the index data from the memory on the basis of the time data;

a trend judger judging whether each currency in each time is up-trend or down-trend based on the index data;

a near zero judger judging whether the index data has value of a predetermined range near zero;

a condition judger judging whether a condition that the index data of both of the sell currency and the buy currency indicate value of a predetermined range near zero, the sell currency is up-rend and the buy currency is down-trend is satisfied or not, and writing an information indicating the currency pair to the memory when the condition is satisfied; and

an output interface outputting an information indicating the currency pair written to the memory as a trading candidate.

18. A currency pair trading support method, comprising:

reading an index data calculated for each time of a predetermined time interval by calculating a change data indicating change within the predetermined time interval of a rate data about a plurality of currency pairs respectively on the basis of the rate data indicating a trading rate of the currency pair in time sequence and accumulating the change data of the currency pairs which target currency is a buying currency or a selling currency in the currency pairs about each currency which is element of the currency pairs, from a memory based on time data;

judging whether each currency in each time is up-trend or down-trend based on the index data;

judging whether the index data has value of a predetermined range near zero;

judging whether a condition that the index data of both of the sell currency and the buy currency indicate value of a predetermined range near zero, the sell currency is down-trend and the buy currency is up-trend is satisfied or not, and writing an information indicating the currency pair to the memory when the condition is satisfied; and

outputting an information indicating the currency pair written to the memory as a trading candidate.

19. A computer program having computer instructions on a computer readable medium, the instructions being adapted to enable a computer system to perform operation, comprising:

reading an index data calculated for each time of a predetermined time interval by calculating a change data indicating change within the predetermined time interval of a rate data about a plurality of currency pairs respectively on the basis of the rate data indicating a trading rate of the currency pair in time sequence and accumulating the change data of the currency pairs which target currency is a buying currency or a selling currency in the currency pairs about each currency which is element of the currency pairs, from a memory based on time data;

judging whether each currency in each time is up-trend or down-trend based on the index data;

judging whether the index data has value of a predetermined range near zero;

judging whether a condition that the index data of both of the sell currency and the buy currency indicate value of a predetermined range near zero, the sell currency is down-trend and the buy currency is up-trend is satisfied or not, and writing an information indicating the currency pair to the memory when the condition is satisfied; and

outputting an information indicating the currency pair written to the memory as a trading candidate.

FIG. 1

16   FX INDEX CALCULATION SERVER   12 FX DEALER SERVER   /31

10 RD GENERATION
SERVER

9

18   FX AUTOMATIC
TRADING SERVER

14 PRIVATE INVESTOR TERMINAL

F I G .
2/31

109
108
107
106
105
104

USD / JPY

TIME

| n            m | $C_1$(USD) | $C_2$(CAD) | $C_3$(JPY) | $C_4$(EUR) | $C_5$(GBP) | $C_6$(CHF) | $C_7$(AUD) | $C_8$(NZD) |
|---|---|---|---|---|---|---|---|---|
| $C_1$(USD) |  | USDCAD | USDJPY |  |  | USDCHF |  |  |
| $C_2$(CAD) |  |  | CADJPY |  |  | CADCHF |  |  |
| $C_3$(JPY) |  |  |  |  |  |  |  |  |
| $C_4$(EUR) | EURUSD | EURCAD | EURJPY |  | EURGBP | EURCHF | EURAUD | EURNZD |
| $C_5$(GBP) | GBPUSD | GBPCAD | GBPJPY |  |  | GBPCHF | GBPAUD | GBPNZD |
| $C_6$(CHF) |  |  | CHFJPY |  |  |  |  |  |
| $C_7$(AUD) | AUDUSD | AUDCAD | AUDJPY |  |  | AUDCHF |  | AUDNZD |
| $C_8$(NZD) | NZDUSD | NZDCAD | NZDJPY |  |  | NZDCHF |  |  |

F I G .
4/31

1 4 PRIVATE INVESTOR TERMINAL

```
                            29                    25
       PROCESSING      WORKING              DISPLAY
31     CIRCUIT         MEMORY

                   20

       MEMORY    I / F    OPERATION
                         UNIT
        27       26           23
```

F I G .
5/31

16    FX INDEX CALCULATION SERVER

| | |
|---|---|
| | |

F I G .
6/31

F I G .
7/31

| R A N K I N G | C U R R E N C Y | I n d e x ( C m ) |
|---|---|---|
| 1 | C 1 | I n d e x ( C Y 1 ) |
| 2 | C 2 | I n d e x ( C Y 2 ) |
| 3 | C 3 | I n d e x ( C Y 3 ) |
| 4 | C 4 | I n d e x ( C Y 4 ) |
| 5 | C 5 | I n d e x ( C Y 5 ) |
| 6 | C 6 | I n d e x ( C Y 6 ) |
| 7 | C 7 | I n d e x ( C Y 7 ) |
| 8 | C 8 | I n d e x ( C Y 8 ) |

F I G .
8/31

```
                    ┌──────────────┐
                    │    START     │
                    └──────────────┘
                            │
                            ▼
        ┌─────────────────────────────────────┐
   ST 1 │      INPUT RATE DATA OF ALL          │
        │           CURRENCY PAIR              │
        └─────────────────────────────────────┘
                            │
                            ▼
        ┌─────────────────────────────────────┐
   ST 2 │   SPECIFY CHANGE VALUE ΔR OF         │
        │        ALL CURRENCY PAIR             │
        └─────────────────────────────────────┘
                            │
                            ▼
        ┌─────────────────────────────────────┐
   ST 3 │   CALCULATE CORRECTED CHANGE         │
        │           VALUE ΔCR                  │
        └─────────────────────────────────────┘
                            │
                            ▼
        ┌─────────────────────────────────────┐
   ST 4 │        CALCULATE INDEX               │
        └─────────────────────────────────────┘
                            │
                            ▼
        ┌─────────────────────────────────────┐
   ST 5 │     CALCULATE I S I n d e x          │
        └─────────────────────────────────────┘
                            │
                            ▼
        ┌─────────────────────────────────────┐
   ST 6 │  OUTPUT CALCULATE I S I n d e        │
        │  x TO FX AUTOMATIC TRADING           │
        │  SERVER                              │
        └─────────────────────────────────────┘
                            │
                            ▼
                    ┌──────────────┐
                    │     END      │
                    └──────────────┘
```

F I G .
9/31

16

| INPUT PORTION |
| --- |

| CHANGE DATA CALCULATION PORTION |
| --- |

| ELEMENT INDEX DATA CALCULATION PORTION |
| --- |

| INDEX DATA CALCULAITON PORTION |
| --- |

MAP ( KEY , DATA ) : ( ADRx- 1 , ADRx+ 1 ) IS INCLUDED IN MAP

F I G .
10/31

| KEY | ADR |
|-----|-----|
| KEY 1 | ADR 1 |
| KEY 2 | ADR 2 |
| KEY 3 | ADR 3 |
| KEY x | ADR x |

I t = ( K E Y x )

| ADR | DAT |
|-----|-----|
| ADR 1 | DAT A 1 |
| ADR 2 | DAT A 2 |
| ADR 3 | A 3 |
| ADR x | DAT A x |

T A B L E

M A P ( K E Y , D A T A )

F I G .
11/31

DB(RD)

DB(RD,D
1)

C n / C m    D 1

M A P ( T I M E ,
R D )

DB(RD,H
4)

C n / C m    H 4

M A P ( T I M E ,
R D )

DB(RD,M
1 5)

C n / C m    M 1
5
M A P ( T I M E ,
R D )

DB(RD,H
1)

C n / C m    H 1

M A P ( T I M E ,
R D )

×28
**CURERNCY
PAIR**

F I G .
12/31

DB ( ⊿R )

DB ( ⊿R , D
1 )

Cn / Cm    D 1

MAP ( T I ME ,
⊿R )

DB ( ⊿R , H
4 )

Cn / Cm    H 4

MAP ( T I ME ,
⊿R )

DB ( ⊿R , M 1
5 )

Cn / Cm    M 1
5
MAP ( T I ME ,
⊿R )

DB ( ⊿R , H
4 )

Cn / Cm    H 1

MAP ( T I ME ,
⊿R )

×28
CURERNCY
PAIR

F I G .
13/31

DB ( I n d e x
( C n ) )

DB ( I n d e x ( C
n ) , D 1 )

DB ( I n d e x ( C
n ) , H 4 )

I n d e x ( C n )
D 1
M A P ( T I M E , I n d e
x ( C n ) )

I n d e x ( C n )
H 4
M A P ( T I M E , I n d e
x ( C n ) )

DB ( I n d e x ( C n ) ,
M 1 5 )

DB ( I n d e x ( C
n ) , H 1 )

I n d e x ( C n )
M 1 5
M A P ( T I M E , I n d e
x ( C n ) )

I n d e x ( C n )
H 1
M A P ( T I M E , I n d e
x ( C n ) )

× 8
**CURERNCY
PAIR**

F I G .
14/31

DB ( R o c ( C n ) )

DB ( R o c ( C n ) , D 1 )

DB ( R o c ( C n ) , H 4 )

R o c ( C n ) D 1
M A P ( T I M E , R o c ( C n ) )

R o c ( C n ) H 4
M A P ( T I M E , R o c ( C n ) )

DB ( R o c ( C n ) , M 1 5 )

DB ( R o c ( C n ) , H 1 )

R o c ( C n ) M 1 5
M A P ( T I M E , R o c ( C n ) )

R o c ( C n ) H 1
M A P ( T I M E , R o c ( C n ) )

× 8
CURERNCY
PAIR

36

FIG.
15/31

START

ST10
N1
INPUT RATE DATA RD OF
ALL CURRENCY OF TIME Tc ?

Y

ST10
N2
INPUT RATE DATA RD OF
TIME Tc TO Tc-x ?

Y

ST10
Y3
CALCULATION OF ALL
CURRENCY END?

N

ST10
4    N
k < x ?

Y

CALCULATE  ΔCR ( Cn / Cm ) ( k )    ST10 5

Index ( Cn、k ) + =+= CR ( Cn / Cm )
( k )    ST10 6

Index ( CYn、k ) - =ΔCR ( Cn / Cm )
( k )

k = k + 1    ST10 7

F I G .
16/31

18    FX AUTOMATIC TRADING
SERVER

F I G .
17/31

START

ST11 INPUT I S I n d e x FROM FX INDEX CALCULATIOIN

ST12 DISPLAY I S I n d e x ON SCREEN

ST13 SPECIFY CURERNCY PAIR WHICH ISIndex OF SELLING CURRENCY INCREASES AROUND ZERO AND ISIndex OF BUYING CURRENCY DECREASES AROUND ZERO ?

N

Y

ST14 DETERMINE CURRENSCY PAR SPECIFIED AT ST13 AS CANDIDATE OF BUYING

END

F I G .
18/31

DB ( I S I n d e x
( C n ) )

DB ( I S I I n d e x ( C
n ) , D 1 )

DB ( I S I I n d e x
( C n ) , H 4 )

I S I n d e x ( C n )
D 1
MAP ( T I ME , I S I I n
d e x ( C n ) )

I S I I n d e x ( C
n )      H 4
MAP ( T I ME , I S I I n
d e x ( C n ) )

DB ( I S I I n d e x ( C
n ) , M 1 5 )

DB ( I S I I n d e x
( C n ) , H 1 )

I S I I n d e x ( C
n )      M 1 5
MAP ( T I ME , I S I I n
d e x ( C n ) )

I S I I n d e x ( C
n )      H 1
MAP ( T I ME , I S I I n
d e x ( C n ) )

× 8
CURERNCY
PAIR

F I G .
19/31

| RANKING | CURRENCY | I n d e x ( C m ) |
|---------|----------|-------------------|
| 1 | U S D | 2 8 . 6 |
| 2 | J P Y | 2 2 . 3 |
| 3 | G B P | 1 6 . 5 |
| 4 | E U R | 7 . 2 |
| 5 | C H F | 2 . 8 |
| 6 | A U D | - 8 . 9 |
| 7 | N Z D | - 1 6 . 4 |
| 8 | C A D | - 2 3 . 8 |

F I G .
20/31

ISIndex(Cm)

USD

JPY

GBP

EUR

TIME CHF

AUD

NZD

F I G .
21/31

I S I n d e x ( G N P )

15 MINITES CHART

HOURLY CHART

DAILY CHART

T I ME

F I G .
22/31

F I G
2 2 A

1. 6975
1. 6915
1. 6855
1. 6795
1. 6735
1. 6675
1. 6615
1. 6555
1. 6495

F I G 2
2 B

108. 5553
0. 00
~74. 7396

A

F I G 2
2 C

76. 5401
27. 2968

F I G .
23/31

1 8

| TREND JUDGE PORTION |
|---|

| AROUND ZERO JUDGE PORTION |
|---|

| CURRENCY PAIR SPECIFY PORTION |
|---|

| TRANSMITTING PORTION |
|---|

F I G .
24/31

```
                    ( START )
                        |
    ┌───────────────────────────────────────────┐
    │  SPECIFY CURERNCY PAIR WHICH                │
    │  ISIndex OF SELLING CURRENCY                │────── N
ST21│  INCREASES AROUND ZERO AND                  │
    │  ISIndex OF BUYING CURRENCY                 │
    │  DECREASES AROUND ZERO ?                    │
    └───────────────────────────────────────────┘
                        | Y
    ┌───────────────────────────────────────────┐
    │  BUYING CRRENCY IS STRONGEST                │
    │  AND SELLING CURRENCY IS                    │────── N
ST22│  WEAKEST AMONG EIGHT                        │
    │  CURRENCIES BEFORE INDEX                    │
    │  BECOMES AROUND ZERO?                       │
    └───────────────────────────────────────────┘
                        | Y
ST23│  DETERMINE TO BUY CURRENCY PAIR             │
    │  SPECFIED AT ST21                           │
                        |
                    ( END )
```

F I G .
25/31

I S Index ( Cn )

STROMGEST
CURRENCY

DETERMIN AS TRADING TARGET

TIME

YEN

USD

WEAKEST CURRENCY

FIG.
26/31

```
                        ┌──────────────┐
                        │    START     │
                        └──────┬───────┘
                               │◄──────────────────────────┐
                    ╱────────────────────────╲             │
                   ╱  SPECIFY CURERNCY PAIR WHICH╲          │
                  ╱   ISIndex OF SELLING CURRENCY ╲    N    │
  ST31          ╱    INCREASES AROUND ZERO AND     ╲───────┤
                ╲    ISIndex OF BUYING CURRENCY     ╱       │
                 ╲   DECREASES AROUND ZERO?        ╱        │
                  ╲────────────────┬─────────────╱          │
                                   │ Y                      │
                    ╱────────────────────────╲             │
                   ╱ BUYING CURRENCY IS MORE THAN╲          │
  ST32           ╱  THRESHOLD OF BUYING OR        ╲   N     │
                ╱   SELLING CURRENCY IS LESS THAN  ╲────────┘
                ╲   THRESHOLD OF SELLING ?         ╱
                 ╲────────────────┬─────────────╱
                                  │ Y
                 ┌────────────────────────────────┐
  ST33           │ DETERMINE TO BUY CURRENCY PAIR  │
                 │      SPECFIED AT ST31           │
                 └────────────────┬───────────────┘
                                  │
                        ┌──────────────┐
                        │     END      │
                        └──────────────┘
```

F I G .
27/31

```
                    ┌──────────────┐
                    │    START     │
                    └──────┬───────┘
                           │
         ┌─────────────────▼─────────────────┐
  ST41   │   CALCULATE RSI OF ISIndex OF      │
         │         ALL CURRENCIES             │
         └─────────────────┬─────────────────┘
                           │
         ┌─────────────────▼─────────────────┐
         │  SPECIFY CURRENCY PAIR WHICH ISIndex│
  ST42   │  OF BUYING CURRENCY IS MORE THAN   │
         │   THRESHOLD OR ISIndex OF SELLING  │
         │   CURRENCY IS LESS THAN THRESHOLD  │
         └─────────────────┬─────────────────┘
                           │
         ┌─────────────────▼─────────────────┐
         │     SPECIFY CURRENCY PAIR WHICH    │
  ST43   │  DIVERGENCE HAS OCCURRED BASED ON  │
         │                RSI                 │
         └─────────────────┬─────────────────┘
                           │
         ┌─────────────────▼─────────────────┐
         │   DETERMINE TO BUY CURRENCY PAIR   │
  ST44   │         SPECFIED AT ST43           │
         └─────────────────┬─────────────────┘
                           │
                    ┌──────▼───────┐
                    │     END      │
                    └──────────────┘
```

FIG.
28/31

DB ( R o c 2 ( C
n ) )

DB ( R o c 2 ( C n ) ,
D 1 )

DB ( R o c 2 ( C
n ) , H 4 )

R o c 2 ( C n )
D 1
M A P ( T I M E , R o c 2
( C n ) )

R o c 2 ( C n )
H 4
M A P ( T I M E , R o c 2
( C n ) )

DB ( R o c 2 ( C n ) ,
M 1 5 )

DB ( R o c 2 ( C
n ) , H 1 )

R o c 2 ( C n )   M
1 5
M A P ( T I M E , R o c 2
( C n ) )

R o c 2 ( C n )
H 1
M A P ( T I M E , R o c 2
( C n ) )

× 8
CURRENCY

F I G.
29/31

F I G
2 9 A

F I G 2
9 B

F I G 2
9 C

FIG.
30/31

START

STEP 1 — ALL OF INDICATOR OF CURRENCY INDICATES AROUND ZERO — N

STEP 2 — TREND FOLLOW METHOD IS SELECTED? — N

Y

STEP 3 — SWITCH TO CONTORIAN METHOD

END

F I G .
31/31

```
                    ( START )
                        |
                        v
+-----------------------------------------------------+
|           READ LIST DATA INDICATING RELATION OF     |
| S 6 1  CURRENCY STRENGTH WHICH IS CONTRADICTORY     |
|              BASED ON CORRELATION                   |
+-----------------------------------------------------+
                        |
                        v
+-----------------------------------------------------+
|         DETECT DISTORTION WHEN RELATION INDICATED   |
| S 6 2  IN THE LIST DATA IS EXIST IN RANKING OF      |
|         CURRENCY STRENGTH BASED ON ISIndex          |
+-----------------------------------------------------+
                        |
                        v
+-----------------------------------------------------+
|      DETECT TIMING WHEN DISTORTION RETURN BASED     |
| S 6 3                ON ISIndex                     |
+-----------------------------------------------------+
                        |
                        v
+-----------------------------------------------------+
|      DETERMIN BUYING AND SELLING OF CURRENCY PAIR   |
| S 6 4      BASED ON RETURN OF DESTORTION            |
+-----------------------------------------------------+
                        |
                        v
                    (  END  )
```

Europäisches
Patentamt

European
Patent Office

Office européen
des brevets

# EUROPEAN SEARCH REPORT

**Application Number**

EP 10 15 8638

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | The claimed subject-matter, with due regard to the description and drawings, relates to processes comprised in the list of subject-matter and activities excluded from patentability under Article 52(2) and (3) EPC. The applicant is advised that in accordance with the established practice of the EPO, no search needs to be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered to be required, as the technical aspects indentified in the present application are considered part of the common general knowledge of the skilled person. For further details, see the Notice from the European Patent Office dated 1 October 2007 (OJ 11/2007; pp. 592 - 593).<br>----- | 1-19 | INV.<br>G06Q40/00 |
| | | | **TECHNICAL FIELDS SEARCHED (IPC)**<br>G06Q |

The present search report has been drawn up for all claims

| Place of search | Date of completion of the search | Examiner |
|---|---|---|
| Munich | 17 June 2010 | Härdeman, David |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)